# EUROPEAN PATENT SPECIFICATION

(11) **EP 3 237 497 B1**
(45) Date of publication and mention of the grant of the patent: **12.06.2019**
(21) Application number: 15820930.4
(22) Date of filing: 09.12.2015
(51) Int. Cl.: C08G 81/02, C04B 24/26, C08F 2/38, C08L 33/24, C08F 8/32

(54) **POLYMETHACRYLIC IMIDE-ACID POLYMERS AND METHODS OF MAKING AND USING**
POLYMETHACRYLIMIDSÄUREPOLYMERE UND VERFAHREN ZUR HERSTELLUNG UND VERWENDUNG
POLYMÈRES POLY(IMIDE D'ACIDE MÉTHACRYLIQUE), LEURS PROCÉDÉS DE FABRICATION ET D'UTILISATION

(30) Priority: 22.12.2014 US 201462095260 P
(43) Date of publication of application: 01.11.2017
(73) Proprietor: Dow Global Technologies LLC, Midland, MI 48674 (US); Rohm and Haas Company, Philadelphia, PA 19106 (US)
(72) Inventor: RAND, Charles J., Collegeville, PA 19426 (US); DEPUIT, Ryan J., Freeport, TX 77541 (US); HARRIS, William J., Freeport, TX 77541 (US); OSWALD, Thomas, Freeport, TX 77541 (US); RODOWSKI, C. Damien, Collegeville, PA 19426 (US); WEINHOLD, Jeffrey D., Freeport, TX 77541 (US)
(74) Representative: Houghton, Mark Phillip
(86) International application number: PCT/US2015/064716
(87) International publication number: WO 2016/105947

(56) References cited:
- WO-A1-98/31643
- WO-A1-2010/005889
- US-A- 4 246 374
- US-A- 4 681 686

## Description

The present invention relates to phosphorus acid group containing polymers of six-membered cyclic methacrylic acid imide (methacrylic imide). More particularly, it relates to phosphite or hypophosphite group containing polymers of six-membered cyclic methacrylic imides having methacrylic acid, salt, ester or amide groups and to methods for making them and using them, for example, as additives to modify polyolefin compositions.

Materials currently used to modify plastics suffer from a number of drawbacks. Plasticizers and other additives can leach from the plastics and so lose their efficacy over time. Methods to increase the coatability of or the surface tension of polymers, such as polyolefins or thermoplastic polyolefin (TPO), require expensive additives like olefin acrylic copolymers, chlorinated polymers, adhesion promoters or compounds that are very hard to make because reaction kinetics do not favor their formation. Methods to improve the lubricity of inexpensive polyolefins involve sacrificial additives which migrate to the surface of the film and bloom or are abraded from the polymer surface. Compatibilizers for blends of incompatible polymers generally comprise incompatible blocks or polymer segments that enable increased miscibility in the polymer blend or they comprise segments that react with one or more of the polymers in the blend; making these requires either multiple reactions to create favorable kinetics to make an additive or expensive reagents, such as, for example n-butyl lithium initiator for anionic block polymerizations which may be very difficult to handle. Methods to boost the modulus of less rigid polymers, such as polyethylene, either attempt to incorporate solids as additives which compromise processing as viscosity increases, require expensive surface modification methods, such as ribbing that lack durability (wear off), or attempt to use incompatible polymers as additives. In addition, most additives are temperature sensitive which means that they have a reduced lifetime if they melt, offgas or sublimate in use. There is a need for polymer additives without these problems.

U.S. Patent No. 4,742,123 to Kopchik discloses the preparation of generic polyacrylic anhydrides and their corresponding imides from aqueous polymers of acrylic acid, methacrylic acid or their copolymers with a large number of comonomers by extrusion at from 200 to 300 °C. Such polymers are somewhat thermally stable where the backbone chain of the polymer has a weight average molecular weights (Mw) of 150,000 or higher mentioned in Kopchik; however, Kopchik only forms high molecular weight polymers because the lower Mw versions of these polymers, for example, at a backbone chain Mw of 20,000 or below, such polymers will not form under the conditions disclosed in Kopchik; they hydrolyse or decompose under the Kopchik extrusion conditions. The Kopchik polymers are used as engineering polymers which may have improved mechanical properties.

Patent Document WO 2010/005889 A1 discloses imidized polymers composed of an poly(alkoxylate)-amine reacted with co-polymers made using hypophosphinate as disclosed in U.S. Patent No. 4,681,686.

U.S. Patent No. 4,246,374 discloses polymeric modifiers to be used in polymeric blends wherein the polymeric modifiers are imidized acrylic polymers, which are non-crosslinked and have thermoplastic properties.

There remains a need for additives for use in or on polymers and polymer blends which result from simple, effective methods to make them and which can be adapted to several polymers or uses.

The present inventors have sought to solve the problem of providing an effective and versatile additive material for use in a variety of polymers and polymer blends which can readily be made simply and without expensive reagents, and to provide the methods for making them.

### STATEMENT OF THE INVENTION

1. In accordance with the present invention, polymer compositions of one or more phosphorus acid group containing, preferably, hypophosphite group containing, polymers of six-membered cyclic methacrylic acid imide comprise a backbone polymer having one or more or, preferably, from two to 100 or, preferably, 5 more methacrylic acid in polymerized form, methacrylic acid salt in polymerized form, quaternary ammonium group, ester side chain group or amide side chain group, wherein the backbone polymers comprise from 60 to 100 wt.%, or, preferably, from 75 to 100 wt.%, or, more preferably, 90 to 100 wt.%, or, most preferably, 95 to 100 wt.%, based on the total weight of monomers used to make the backbone polymer, of total methacrylic acid polymerized units, regardless of their form, and wherein a total of from 7.5 to 95 wt.%, or less than 70 wt.% or, preferably, from 50 to 68 wt.%, or, more preferably, from 60 to 66.7 wt.%, of the methacrylic acid polymerized units comprise six-membered cyclic methacrylic anhydride groups and six-membered cyclic methacrylic imide groups formed from the methacrylic anhydride groups, the number of methacrylic anhydride groups determined by titration of the backbone polymers prior to forming the six-membered cyclic methacrylic imide groups in the backbone polymers,
   wherein the polymers are substantially linear, meaning that they have less than 3% of imide or anhydride groups, based on the amount of methacrylic anhydrides as determined by titration of the backbone polymer of methacrylic anhydride used to make the polymer, that form crosslinks or intrachain backbite links along the backbone polymer; and
   wherein the polymers have on average at least one phosphorus atom in the backbone of the polymer that is bound to a carbon atom as a terminal or pendant group; and wherein the titration is carried out according to the description.
2. In accordance with the polymer compositions of item 1, above, the one or more phosphorus acid group containing polymers of six-membered cyclic
   methacrylic imide of the present invention, excluding side chains, quaternary ammonium groups, the metals in any methacrylic acid salts, and N-substituents on any methacrylic imide group, such as amine or alcohol compounds, have a weight average molecular weight (Mw) of from 1,000 to 25,000, or, preferably, 2,000 or more, or, preferably, 15,000 or less, or, more preferably, 10,000 or less.
3. In accordance with the polymer compositions of items 1 or 2, above, wherein the one or more polymers of six-membered cyclic methacrylic imide have one or more N-substituent on the six-membered cyclic methacrylic imide chosen from an N-alkyl substituted six-membered cyclic methacrylic imide, an N-polydiorganosiloxanyl substituted six-membered cyclic methacrylic imide, an N-polyolefin substituted six-membered cyclic methacrylic imide, an N-vinyl polymer substituted six-membered cyclic methacrylic imide, an N-polyamide polymer substituted six-membered cyclic and combinations thereof.
4. In accordance with the polymer compositions of items 1, 2 or 3, wherein the one or more polymers of six-membered cyclic methacrylic imide is N-polydiorganosiloxanyl substituted and the N-polydiorganosiloxanyl group is chosen from an N-polydimethylsiloxane, an N-polydiphenylsiloxane, an N-polydiarylsiloxane and an N-polymethylphenylsiloxane.
5. In accordance with the polymer compositions of items 1, 2, 3 or 4, above, wherein the six-membered cyclic methacrylic imide contains an N-substituted hydrophobe chosen from an N-C₁ to C₅₀₀ alkyl or, preferably, N-C₆ to C₂₅₀ alkyl or, preferably, C₆ to C₁₅₀ alkyl substituted six-membered cyclic methacrylic imide and an N-polyolefin, such as polyethylene or polypropylene, substituted six-membered cyclic methacrylic imide.
6. In accordance with the polymer compositions of any one of items 1, 2, 3, 4, or 5, above, wherein the one or more phosphorus acid group containing polymers of six-membered cyclic methacrylic imide further contain one or more methacrylic acid salt in polymerized form, quaternary ammonium carboxylate group, ester side chain group or amide side chain group chosen from an ether amide side chain group, a polyether amide side chain group, an ether ester side chain group, a polyether ester side chain group, a hydrophobic C₁ to C₅₀₀ or, preferably, C₆ to C₂₅₀, e.g. C₆₀ alkyl ester side chain, a hydrophobic C₁ to C₅₀₀ or, preferably, C₆ to C₂₅₀, e.g. C₆₀ alkyl amide side chain, a polyolefin ester side chain, a polyolefin amide side chain, a polysiloxanyl amide side chain, a polysiloxanyl ester side chain, a quaternary ammonium group , preferably, a dimethyl di(dodecyl) ammonium group([(CH₃)₂(C₁₂H₂₅)₂N]⁺). Preferably, the methacrylic acid salt group is chosen from a monovalent metal salt, such as an alkali metal, a divalent metal salt, such as zinc or an alkaline earth metal, or a trivalent metal salt, such as iron salts.
7. In accordance with the polymer compositions of any one of items 1, 2, 3, 4, 5, or 6, above, wherein the one or more phosphorus acid group containing polymers of six-membered cyclic methacrylic imide have a hypophosphite group and comprise from 1 to 20 wt.%, preferably, 4 wt.% or more, or, preferably, 15 wt.% or less of a hypophosphite compound or its salts, such as, for example, sodium hypophosphite, based on the total weight of phosphorus acid group containing and monomer reactants (i.e., monomers, hypophosphite compounds and chain transfer agents) used to make the backbone polymer of the polymer.
8. In accordance with the polymer compositions of any of items 1, 2, 3, 4, 5, 6, or 7, above, the one or more phosphorus acid group containing polymers of six-membered cyclic methacrylic imide comprise the reaction product of less than 2 wt.%, based on the total weight of monomers and phosphorus acid group containing reactants used to make the backbone polymer, of reactants other than methacrylic acid, its salt or its anhydride, or any phosphorus acid compound.
9. In accordance with the polymer compositions of any of items 1, 2, 3, 4, 5, 6, 7, or 8, above, wherein at least one of the one or more phosphorus acid group containing polymers of six-membered cyclic methacrylic imide is a linear polymer.
10. In accordance with the polymer compositions of any of 1 to 9, above, wherein the one or more phosphorus acid group containing polymers of six-membered cyclic methacrylic imide have an Mw of from 1,200 to 1,500,000, or, preferably, from 3000 to 500,000 or from 5,000 to 50,000.
11. In accordance with the compositions of any of items 1 to 10, above, the compositions comprising the one or more phosphorus acid group containing polymers of six-membered cyclic methacrylic imide having one or more methacrylic acid, methacrylic acid salt, quaternary ammonium group, ester side chain group, or amide side chain group comprise powders, pellets, granules, or suspensions thereof in non-aqueous carriers, such as oils, e.g., vegetable oils, glycols, polyglycols, ethers, glycol ethers, glycol esters and alcohols.
12. In accordance with the composition of item 11, above, wherein the compositions further comprise a polymer chosen from a polyolefin, such as polyethylene or thermoplastic polyolefins, a polyester, a polyamide, a vinyl polymer, such as polystyrene, a copolymer of vinyl alcohol, or a vinyl ester, e.g., vinyl acetate, copolymer, an acrylic emulsion polymer, combinations thereof and blends thereof.
13. In accordance with the composition of item 12, above, wherein the compositions comprise from 0.1 to 30 wt.%, or, preferably, from 0.2 to 15 wt.%, or, more preferably, from 0.5 to 8 wt.% of the one or more phosphorus acid group containing polymers of six-membered cyclic methacrylic imide, based on the total solids weight of the compositions.
14. In another aspect of the present invention, methods for making phosphorus acid group containing polymers of six-membered cyclic methacrylic acid imide (methacrylic imide) having one or more methacrylic acid, salt, quaternary ammonium, ester, or amide according to item 1 to 12, wherein the methods comprise aqueous solution polymerizing to form a precursor polymer a monomer mixture of one or more phosphorus acid compound and from 60 to 100 wt.%, or, preferably, from 75 to 100 wt.%, or, more preferably, 90 to 100 wt.%, or, most preferably, 95 to 100 wt.%, based on the total weight of monomers used to make the precursor polymer of methacrylic acid or its salts as polymerized units, drying the precursor polymer with no or as little agitation or shear as possible in an oven, or any extruder, kneader or kneader reactor comprising a low shear extruder, preferably without agitation, to form a methacrylic anhydride group containing backbone polymer having from 7.5 to 95 wt.%, or less than 70 wt.% or, preferably, from 50 to 68 wt.%, or, more preferably, from 60 to 66.7 wt.%, of the methacrylic acid polymerized units in the form of methacrylic anhydride, preferably, at least one of which is a six-membered cyclic methacrylic anhydride group, as determined by titration of the methacrylic anhydride group containing backbone polymer, and reacting in a fluid medium, such as in a melt or non-aqueous dispersion or solution, at from 0 to 220 °C, or, preferably, from 15 to 140 °C the methacrylic anhydride group containing backbone polymer with one or more amine compound in a molar amount of amine not to exceed the moles of methacrylic anhydride in the methacrylic anhydride group containing backbone polymer, as determined by titration, to form at least one amic acid group, and then reacting in a fluid medium the amic acid group with a neighboring methacrylic acid group on the backbone polymer at from 100 to 250 °C, or, preferably, from 100 to 200 °C to form a six-membered cyclic methacrylic imide group containing polymer.
15. In accordance with the methods of item 14, above, wherein the drying of the precursor backbone polymer comprises heating it to a temperature of 175 to 250 °C, preferably, 180 °C or more or, preferably, 220 °C or less, or, more preferably, 200 °C or more, to form a methacrylic anhydride group containing backbone polymer.
16. In accordance with the methods of items 14 or 15, above, wherein the drying takes place in an oven, an extruder comprising at least one devolatilization zone, kneader or kneader reactor, fluid bed dryer, evaporator, heated mixer and any of the foregoing following spray drying, preferably, an extruder, kneader or kneader reactor comprising a low shear zone.
17. In accordance with the methods of any of items 14, 15 or 16, above, wherein the drying and reacting in a fluid medium takes place in the same extruder, kneader or kneader reactor such that the amine compound is added to downstream from where drying has taken place.
18. In accordance with the methods of any of items 14, 15, 16 or 17, above, wherein the reacting in a fluid medium takes place in a reaction vessel in a non aqueous aprotic solvent such as, for example, aprotic amides, aprotic ureas, aprotic sulfoxides, aprotic phosphates, including N,N-dimethylacetamide, 1-methyl-2-pyrrolidinone, tetramethylurea, dimethylsulfoxide, triethyl phosphate, preferably, 1-methyl-2-pyrrolidinone.
19. In accordance with the methods of any of items 14, 15, 16, 17 or 18, above, further comprising, reacting in a fluid medium, such as in a melt or non-aqueous dispersion or solution, at from 0 to 250 °C, or, preferably, from room temperature to 220 °C, the six-membered cyclic methacrylic imide group containing polymer with one or more amine compound or alcohol in a molar amount of amine or alcohol not to exceed the total moles of methacrylic acid used to make the precursor polymer minus the number of moles methacrylic anhydride found in the methacrylic anhydride group containing backbone polymer, as determined by titration, to form one or more methacrylic acid amide groups or ester groups.
20. In accordance with the methods of item 19, above, wherein the amine compound or alcohol has a group chosen from a C₁ to C₅₀₀alkyl group, a polyolefin group, a polysiloxanyl group, an ether group, a polyether group, and mixtures thereof.
21. In accordance with the methods of any of items 19 or 20 above, wherein the amine compound is a primary amine or the alcohol is a primary alcohol.

Any reference to "acid polymerized units" excludes monomers that are not in their acid or salt form when polymers; thus, polymerized forms of (meth)acrylamides and alkyl methacrylate ester monomers, which are polymerized as ester and amide monomers, are not considered to be "methacrylic acid polymerized units".

As used herein , the term "ASTM" refers to publications of ASTM International, West Conshohocken, PA.

As used herein, the term "methacrylic acid polymerized units" refers to the polymerized form of methacrylic acid, its salts, its anhydride, methacrylic acid anhydride, i.e., polymerized methacrylic acid in anhydride form, its imide, i.e., polymerized methacrylic acid in imide form, and its ester or amide, i.e., polymerized methacrylic acid that is esterified or amidated after polymerization. Note that a single methacrylic anhydride or a six-membered cyclic methacrylic imide in polymerized form comprises two methacrylic acid polymerized units.

As used herein, the term "based on the total weight of monomers" refers to the total weight of addition monomers, such as, for example, vinyl or acrylic monomers.

As used herein, the term "Fourier transform infrared (FTIR) spectroscopy" means, as indicated, that which creates a spectrum measured using A) the method wherein the sample was ground into a fine powder placed on a DuraSampllR (Thermo Fisher Scientific Waltham, MA) attenuated total reflectance (ATR) sampling unit attached to a Nicolet 38FT-IR (Thermo Fisher Scientific Waltham, MA) to collect spectrum. Analysis was done using OMNIC software (Thermo Fisher Scientific Waltham, MA); or using B) a KBr pellet sample with material dispersed in a KBr carrier or solution cast and vacuum dried on a polytetrafluoroethylene (PTFE) disposable infrared card with a ThermoNicolet™ Avatar 390 DTGS FTIR spectrometer (Thermo Fisher Scientific Waltham, MA) having data collection parameters set at 4 cm⁻¹ resolution, 32 scans, 32 background scans, under a nitrogen purge and an optical velocity of 0.6329. The ATR accessory was preheated to the desired temperature, and then a film of an aqueous solution of the analyte polymer was cast onto the ATR crystal. Spectra were continuously measured over time.

As used herein, unless otherwise indicated, the term "molecular weight" or "Mw" refers to a weight average molecular weight as determined by aqueous gel permeation chromatography (GPC) using an Agilent 1100 HPLC system (Agilent Technologies, Santa Clara, CA) equipped with an isocratic pump, vacuum degasser, variable injection size auto-sampler, and column heater. The detector was a Refractive Index Agilent 1100 HPLC G1362A. The software used to chart weight average molecular weight was an Agilent ChemStation, version B.04.02 with Agilent GPC-add on version B.01.01. The column set was TOSOH Bioscience TSKgel G2500PWxl 7.8 mm ID X 30 cm, 7 µm column (P/N 08020) (TOSOH Bioscience USA South San Francisco, CA)and a TOSOH Bioscience TSKgel GMPWxl 7.8 mm ID X 30 cm, 13 µm (P/N 08025) column. A 20 mM Phosphate buffer in MilliQ HPLC Water, pH -7.0 was used as the mobile phase. The flow rate was 1.0 ml/minute. A typical injection volume was 20 µL. The system was calibrated using poly(acrylic acid), Na salts Mp 216 to Mp 1,100,000, with Mp 900 to Mp 1,100,000 standards from American Polymer Standards (Mentor, OH). Such an Mw is used to assess backbone polymer Mw.

As used herein, the term "monomers used to make the backbone polymer" excludes any reactants used to make quaternary ammonium groups, metals in methacrylic acid salts, ester or amide side chains, such as amine or alcohol compounds, and any N-substituent groups on any methacrylic imide group.

As used herein, the term "polyether" means any compound having three or more repeat ether groups.

As used herein, the term "titration" is as described below in the Examples for determining the methacrylic anhydride proportion and the carboxylic acid or salt proportion in a given backbone polymer. In any backbone polymer of methacrylic anhydride, the calculated percentage of COOH groups not converted into methacrylic anhydride, based on the total amount of methacrylic acid polymerized units, equals 100% minus the calculated percent of COOH groups that have been converted into anhydride groups. For any polymer having methacrylic anhydride and six-membered cyclic methacrylic imide groups, it is assumed that any six-membered cyclic methacrylic imide groups were formed from methacrylic anhydride groups; thus, the calculated percent of COOH groups not converted into anhydride or imide groups for any comb polymer is the same as the calculated percent of COOH groups not converted into anhydride in a corresponding backbone polymer. The amount of anhydride groups found to exist in any backbone polymer is thus considered equal to the total amount of anhydride groups plus imide groups in any polymer or comb polymer.

As used herein, the term "wt.%" stands for weight percent.

All ranges recited are inclusive and combinable. For example, a disclosed temperature of 175 to 250 °C, preferably, 180 °C or more or, preferably, 220 °C or less, or, more preferably, 200 °C or more, would include a temperature of from 175 to 180 °C, from 175 to 220 °C, from 175 to 200 °C, from 180 to 250 °C, preferably, from 180 to 220 °C, preferably, from 180 to 200 °C, preferably, from 200 to 250 °C, more preferably, from 200 to 220 °C, and from 175 to 250 °C.

Unless otherwise indicated, all temperature and pressure units are room temperature and standard pressure.

All phrases comprising parentheses denote either or both of the included parenthetical matter and its absence. For example, the phrase "(poly)ether" includes, in the alternative, ether and polyether.

The present invention provides polymer compositions that provide excellent and versatile polymeric additives and, as well, simple, cost effective methods for making the polymeric additives. The phosphorus acid group containing six-membered cyclic methacrylic imide group containing polymers of the present invention can have many of various kinds of N-substitutions linked to the nitrogen of the cyclic methacrylic imide, and the backbone polymers and six-membered cyclic methacrylic imides of the present invention are highly thermally stable. Such polymers are made from phosphorus acid group containing methacrylic acid polymers that form methacrylic anhydrides at unusually low temperatures, approximately 30 °C lower than poly(methacrylic acid) (pMAA) polymers prepared in the absence of phosphorus acid compounds. In addition, the polymers of the present invention are formed from methacrylic anhydride containing backbone polymers that are thermally stable over a broad temperature range and do not readily char or decompose as do the corresponding backbone polymers of methacrylic acid prepared in the absence of phosphorus acids, like hypophosphite or its salts. Unlike their poly(acrylic acid) (pAA) or pAA anhydride analogues, the phosphorus acid group containing backbone polymers of methacrylic anhydride can be thermally formed without any decomposition. The polymers of the present invention may be used to provide modulus enhancement in thermoplastics such as polyolefins wherein the imide and ester groups are selected to provide miscibility with the host polymer. The imide structure is also thermally stable at host polymer (such as polyethylene) processing temperatures. In particular, where the polymer contains an alternating structure of imide and acid, this prevents the ring closing of adjacent ester groups at polyolefin processing temperatures with elimination of the hydrophobic alcohol. For water soluble polymers of the present invention, the presence of the imide structures in the polymer backbone increases the stiffness of the polymer and increases its ability to increase the viscosity of the water.

The polymers of the present invention are "substantially linear", meaning that they have less than 3% of imides or anhydride groups, based on the amount of methacrylic anhydrides as determined by titration of the backbone polymer of methacrylic anhydride used to make the polymer, that form crosslinks or intrachain links (backbite) along the backbone polymer. Such polymers can act like rigid rod polymers in uses ranging from polymeric additives to aqueous thickeners.

The structure of the six-membered cyclic methacrylic imide polymers of the present invention permits simple modification of the polymer to create two or more differing functional groups. The six-membered cyclic methacrylic imide group and a six-membered cyclic methacrylic anhydride groups which do not lie back to back along a polymer chain but are interrupted by one acid group between them. Thus, the polymers of the present invention are preferably substantially linear and have from 50 to less than 70 wt.%, preferably, up to 67 wt.% total of methacrylic anhydride and six-membered cyclic methacrylic imide groups, based on the total weight of methacrylic acid polymerized units in the backbone polymers. The polymers have acid or acid salt groups which react at temperatures at which the anhydrides and imides do not react. Thus, once an N-substituent is formed on a six-membered cyclic methacrylic imide, the remaining functionality on the inventive polymer may be independently functionalized to provide other properties, like desired surface energy on a surface.

Because of the high relative reactivity of methacrylic anhydride with amine compounds as compared to the reactivity of methacrylic acid with alcohols or amines, the methacrylic anhydride group containing backbone polymers can readily be modified to include six-membered cyclic methacrylic imides without reaction of the methacrylic acid or salt groups on the backbone polymers.

The compositions of the present invention enable the provision of compositions that one can "print" on a polymer by a process of melt fusion or blend into a bulk of polymer to vary the surface energy of the polymer, and potentially the reactivity of the polymer or substrate surface.

Preferably, the compositions of the present invention, especially those comprising N-substituted polydiorganosiloxanes provide desirable surface energies on polyolefins such as polyethylene and polypropylene. This can enable improved "slip" and low surface energy to reduce the friction between the polyolefin object and a surface, especially in film applications. This can also enable high surface energies through use of N-polyether groups. Preferably, compositions for low surface energy comprise N-polydiorganosiloxanyl substituted polymers of six-membered cyclic methacrylic acid imide (methacrylic imide). Preferably, compositions for high surface energy have use for improving water sheeting surfaces and for improved printability.

Preferably, if anhydride functionality remains on the polymers of the present invention, the surfaces formed from compositions comprising the polymers may impart desired reactive properties to polyolefins like polyethylene (PE) on which the polymers are printed coated, or with which they are blended, such as may be of use as a tie layer of, e.g., PE to polyethylene terephthalate (PET) or a blend thereof.

Preferably, the polymer compositions of the present invention contain one or more group which provides the inventive polymer with affinity for a host polymer (e.g. polyolefinyl groups or alkyl chains in the case of polyethylene, ethylene oxide chains in the case of nylon), either on the imide or as an ester group or amide group. Thus, preferred polymer compositions comprising N-substituted polydiorganosiloxanes provide desirable low surface energies on polyolefins such as polyethylene and polypropylene when the polymer also has one or more ester or amide side chain alkyl or polyolefinyl group, as can be formed from suitable hydrophobic alcohols or amines.

Preferably, the polymer compositions of the present invention have polyether group containing side chains along with one or more group which provides the inventive polymer with affinity for a host polymer. Such polymers having alkyl or polyolefinyl groups can enable improved surface adhesion and introduce polarity into polyolefins with which the compositions are combined.

The compositions of the present invention enable a surprising boost in the modulus of thermoplastics such as polyethylene and ethylene/α-olefin copolymers without the need to raise the polymer density or melting or softening point, which can impair impact strength and heat processing functions in polyolefins. Such compositions comprise a hydrophobic polyolefin or C₆ to C₂₅₀ alkyl ester/amide side chain group containing polymer of six-membered cyclic methacrylic imide, N-hydrophobic C₆ to C₂₅₀ alkyl group substituted polymer of six-membered cyclic methacrylic imide or N-polyolefin group substituted polymer of six-membered cyclic methacrylic imide as additives for polyethylene.

Preferably, modulus boosting additives comprise one or more or, preferably, two or more, hydrophobic polyolefin or C₆ to C₂₅₀ alkyl ester/amide side chain group containing polymer of six-membered cyclic methacrylic imide further having an N-alkyl or N-hydrocarbon or N-polyolefin substituted six-membered cyclic methacrylic imide, such as a N-C₆ to C₂₅₀ alkyl substituted imide.

Preferably, in accordance with the present invention, when compatibilizing polyolefins, e.g., polyethylene or polypropylene resins, with polymers such as polyesters, like polyethylene terephthalate (PET) and polybutylene terephthalate (PBT), or polyamides, e.g., poly(hexanamides) (NYLON™ 6, DuPont), the backbone polymers of six-membered cyclic methacrylic imide can comprise (i) one or more group chosen from a methacrylic acid or salt group, a methacrylic anhydride group, an N-substituted ether or polyether group containing six-membered cyclic methacrylic imide, and an ether or polyether ester or amide side chain group, and (ii) one or more group chosen from a polyolefin ester or amide, a hydrophobic C₆ to C₅₀₀ alkyl ester or amide side chain group, an N-alkyl group, such as a C₆ to C₂₅₀ alkyl group, or an N-polyolefin group substituent.

Preferably, the polymers of the present invention comprise (i) one or more hydrophobic alkyl or polyolefin ester or amide side chain group or N-substituent on a six-membered cyclic methacrylic imide group and (ii) one or more quaternary ammonium compound.

Preferably, the polymers of the present invention comprise (i) one or more N-substituted C₁ to C₅₀₀ alkyl group on a six-membered cyclic methacrylic imide, or one or more C₁ to C₅₀₀ alkyl ester or amide side chain group, the alkyl group being preferably, a C₆ or higher, or, more preferably, a C₆ to C₂₅₀ alkyl group and (ii) a six-membered cyclic methacrylic imide, methacrylic acid ester or methacrylic acid amide side chain group containing a diether, polyether, or siloxanyl group. Some or all of the methacrylic acid or salt groups on the polymers of the present invention may be neutralized to form an ionomer wherein the cation is chosen from monovalent metals, such as an alkali metal, a divalent metal, a trivalent metal and a quaternary ammonium group.

Preferably, to create biocidal properties the polymer compositions of the present invention are partially or completely neutralized to form an ionomer wherein the composition comprises quaternary ammonium groups, such as dimethyl di(dodecyl) ammonium ([(CH₃)₂(C₁₂H₂₅)₂N]⁺).

Preferably, the polymers of the present invention comprise at least one alternating six-membered cyclic methacrylic imide group and a methacrylic acid or salt group in polymerized form, quaternary ammonium group, ester or amide group; such polymers may have, for example, the structure, acid/salt/ester/amide-(six-membered cyclic imide-acid/salt/ester/amide)ₓ where x is from 2 to 120.

Most preferably, to increase their kinetic availability (to include functional groups and side chains) the polymers of the present invention comprise less than 3 wt.% of anhydride or imide containing polymerized units that crosslink or backbite along the backbone polymer.

Preferably, the precursor polymers are chosen from hypophosphite or phosphite containing homopolymers of methacrylic anhydride, i.e., made from methacrylic acid and phosphite or hypophosphite compound reactants only.

Preferably, from 50 to 100 wt.%, or, preferably, at least 90 wt.% of the methacrylic anhydride groups in any methacrylic anhydride group containing polymer is converted to a six-membered cyclic imide group. More preferably, for each mole of methacrylic acid polymerized units in the backbone polymers, 65 to 68% is converted to a six-membered cyclic methacrylic imide.

Preferably, to insure a linear backbone polymer having six-membered cyclic methacrylic imide groups, the backbone polymers of the present invention comprise only up to less than 70 wt.%, for example, 60 to 66.7 wt.%, of total methacrylic anhydrides, based on the total amount of methacrylic acid polymerized units as determined by titration.

Preferably, the polymers of the present invention comprise N-substituent groups on at least 10 wt.%, or, preferably, from 15 to 100 wt.%, or, more preferably, at least 25 wt.% of the six-membered cyclic methacrylic imide groups in the polymer chain, based on the total number methacrylic acid polymerized units in the six-membered cyclic imide form.

Suitable N-substituents on the six-membered cyclic methacrylic imide groups of the polymer of the present invention may be chosen from N-substituted C₁ to C₅₀₀ alkyl groups, N-substituted polyolefin groups, N-substituted polyamide groups, N-substituted ethylene-propylene-diene block copolymer groups, N-substituted polybutadiene groups, N-substituted polydiorganosiloxanyl group , N- substituted ether groups, N-substituted polyether groups, as well as mixtures thereof.

Examples of a suitable N-polydiorganosiloxanyl group imide substituent may be chosen from an N-polydimethylsiloxane, an N-polydiphenylsiloxane, an N-polydiarylsiloxane and an N-polymethylphenylsiloxane. Suitable polydiorganosiloxanyl groups may have from 1 to 500 repeat units, for example from 5 to 250 repeat units.

Suitable polyolefin groups that can be ester, amide or N-subsituents on six-membered cyclic methacrylic imides may include those with a weight average molecular weight (Mw) as determined by conventional GPC methods as known in the art, with the appropriate polymeric standard, ranging from 500 up to 100,000 or up to 25,000 or up to 10,000, or preferably, 2,500 to 15,000 for polyethylene substituents, or preferably, 10,000 or more for polypropylene substituents).

Examples of N-hydrophobic group substituents on the six-membered cyclic methacrylic imide polymers of the present invention may include one or more or a distribution of C₁ to C₅₀₀ hydrocarbons, cycloaliphatic hydrocarbons, or aryl hydrocarbons one. Suitable materials for making such N-hydrophobic groups may be fatty amines having a C₁ to C₁₀₀ or, preferably, a C₆ to C₆₀ alkyl group; olefinic amines, such as amine terminated polyolefins, and amine terminated block copolymers or oligomeric olefins terminated with an amine; anilines or cyclohexylamines. Further, amine terminated C₁ to C₅₀₀ or, preferably, C₆ to C₂₅₀ groups can contain a cycloaliphatic or aryl groups along a hydrocarbon chain or as a pendant group on a hydrocarbon chain.

Examples of suitable N-ether and N-polyether six-membered cyclic methacrylic imide substituents or suitable ether or polyether ester or amide side chain groups are ethoxy groups, polyethoxy groups having from 2 to 500 ethylene oxide repeat units, polypropoxy groups having from 1 to 500 propylene oxide units, and combinations thereof.

Preferably, the polymers of the present invention comprise methacrylic acid groups in polymerized form, ester side chain groups, amide side chain groups, quaternary ammonium groups or metal salt groups on at least 2.5 wt.%, or, preferably, from 5 to 40 wt.%, or, more preferably, from 10 to 33.3% of the total number methacrylic acid polymerized units in polymer.

The polymers of the present invention comprise at least one six-membered cyclic methacrylic imide and having one or more or, preferably, two or more, or, 5 or more, methacrylic acid group in polymerized form, ester side chain group, amide side chain group, quaternary ammonium group or metal salt group. The methacrylic acid salt, ester or amide groups, may include quaternary ammonium groups, hydrophobic groups, like fatty esters or amides, polyolefins, and metal carboxylates. Because of the high reactivity of methacrylic acid relative to a six-membered cyclic methacrylic imide group once it has been formed, the backbone polymers can readily be modified on the acid groups via formation of salt, amide or ester linkages without interfering with the six-membered cyclic imide groups on the polymers of the present invention. For example, the presence of methacrylic acid or salt groups on the backbone polymer of the present invention enables ready formation in a heated melt or non-aqueous mixture of six-membered cyclic methacrylic imide group containing backbone polymers having a variety of other functional groups on the backbone polymer.

Esterification or amidation of the six-membered cyclic methacrylic imide group containing polymers of the present invention results from reacting the one or more remaining methacrylic polymerized acid groups on the polymer with an alcohol or amine compound, such as a hydrophobic group containing alcohol or amine, like a fatty alcohol or amine, a polyolefin containing alcohol or amine.

The six-membered cyclic methacrylic imide group containing backbone polymer of the present invention may be an ionomer, such as sodium methacrylate, which may be made with metal hydroxides, and metal oxides, such as NaOH, KOH, CaO, or any combination of metal hydroxides and oxides. The ionomer may comprise any metal or quaternary ammonium cation or combination of such cations. Preferably, polymer melts comprise polymeric ionomers of the present invention to increase the tackiness of a polymer melt, i.e., as tackifiers, in polymer compositions and applications that require bond strength and hot tack.

Quaternary ammonium groups can be bound to the acid functional groups on the backbone polymers of the present invention via ion exchange of a singly charged metal cation, preferably sodium, with a quaternary amine. A quaternary ammonium salt of the methacrylic acid can be formed directly with a quaternary ammonium compound.

Suitable quaternary ammonium compounds may be any known compounds, such as tetramethylammonium hydroxide, tetramethyl ammonium chloride, nonyl trimethyl ammonium bromide, decyl trimethyl ammonium bromide, dodecyl trimethyl ammonium bromide, tetradecyl trimethyl ammonium bromide, hexadecyl trimethyl ammonium bromide, octadecyl trimethyl ammonium bromide, didecyl dimethyl ammonium chloride, didecyl dimethyl ammonium bromide, didodecyl dimethyl ammonium bromide, dioctadecyl dimethyl ammonium bromide, benzyl dimethyl octadecyl ammonium bromide, tetradecyl, octadecyl benzyl dimethyl ammonium chlorides, dodecyl tetradecyl octadecyl benzyl dimethyl ammonium chlorides, cationic bisguanides, and mixtures thereof. All compounds mentioned in this paragraph are available from Aldrich Chemicals, St. Louis, MO.

Suitable quaternary ammonium groups are biocidal agents. In contrast, in known technology a biocide additive is dissolved in the water and more easily contaminates groundwater or the ambient surroundings. As the backbone polymers of the present invention containing a quaternary ammonium group are not attacked by bacteria and therefore do not promote or sustain bacteria growth, the need for biocidal activity is much reduced over known technology. For example, the compositions of the present invention comprising quaternary ammonium or their salts on carboxylic acid groups on the backbone polymer is of particular use in oil and gas production activities many of which, including tracking and several forms of enhanced oil recovery, require water to have increased viscosity.

Another quaternary ammonium compound, ammonium dimethyl diethanol can be used to make polyolefin surfaces more printable or coatable.

In accordance with the methods of present invention, phosphorus acid group containing precursor polymers are formed by aqueous solution polymerization, are dried at temperatures high enough to form methacrylic anhydride and methacrylic acid group containing backbone polymers, which are then reacted with an amine compound in a fluid medium, such as a melt or non-aqueous medium, to form amic acid side chains, and heating to form six-membered cyclic methacrylic imide groups from the amic acid and a neighboring methacrylic acid on the polymer. The amic acid side chains can also be dehydrated by chemical agents to form a six-membered cyclic methacrylic imide group from the amic acid and a neighboring methacrylic acid on the polymer with a typical chemical dehydrating agent such as acetic anhydride with a base catalyst like 3-picoline. A combination of chemical agents and heat can also be used to form the six-membered cyclic methacrylic imide groups from amic acid.

The comb polymers may be further functionalized at remaining acid groups to form ester or amide side chains, including quaternary ammonium groups or esters or amides.

In accordance with the present invention, the phosphorus acid group containing precursor polymers are formed by conventional aqueous solution polymerization methods in the presence of the phosphorus acid compound from 60 wt.% or more and up to 98 wt.% of methacrylic acid (MAA) and/or its salts, preferably, 70 wt.% or more, or, more preferably 80 wt.% or more, and the remainder of one or more phosphorus acid compounds and, if desired, a vinyl or acrylic comonomer, based on the total weight of monomers and reactants including the hypophosphite that are used to make the backbone polymer.

The phosphorus acid group containing polymers of the present invention have on average at least one phosphorus atom in the backbone polymer that is bound to a carbon atom, as a terminal or pendant group. Terminal groups may be a phosphinate or phosphonate, such as a monophosphinate, having a vinyl polymer backbone substituent. The at least one phosphorus atom in the backbone polymer can be bound to two carbon atoms, as a phosphite along the carbon chain, such as a diphosphinate having two vinyl polymer backbone substituents, e.g., a dialkyl phosphinate. The varied structures of such polymers is described in U.S. Patent No. 5,294,686 to Fiarman et al.

Preferably, the backbone polymers of the present invention are made from precursor polymers chosen from hypophosphite or phosphite containing homopolymers of methacrylic acid, i.e., made from methacrylic acid and phospite or hypophosphite compound reactants only, and phosphite containing homopolymers of methacrylic anhydride, hypophosphite group containing copolymers of methacrylic acid made with less than 20 wt.%, based on the total weight of monomers used to make the precursor polymer, of vinyl or acrylic monomers other than methacrylic acid or its salts.

Suitable comonomers for use in making the precursor polymers of the present invention may be any vinyl or acrylic monomer which is thermally stable such that a homopolymer of the monomer having a weight average molecular weight of 50,000 would lose less than 5 wt.% of its weight corresponding to polymer degradation at 250 °C after 5 minutes.

Suitable comonomers include, for example, methacrylamide, C₁ to C₆ alkyl (meth)acrylamides, C₁ to C₆ dialkyl (meth)acrylamides, styrene and alpha-methyl styrene, acrylic acid and C₁ to C₆ alkyl methacrylates, and are, preferably, methyl methacrylate, or ethyl acrylate.

As for comonomer proportions suitable for use as starting materials for use in making the precursor polymers of the present invention, adding too much of any comonomer which is not water soluble, such as styrene, will result in a monomer mixture may be difficult to solution polymerize or which exhibits sluggish reaction kinetics. If one uses too much of any comonomer, one cannot achieve a sufficiently high proportion of methacrylic anhydride groups on the backbone polymer of the present invention and may not achieve the corresponding thermal stability or advantageous reactivity conferred by such anhydride groups.

Suitable phosphorus acid group containing compounds for use in making phosphorus acid group containing precursor polymers of methacrylic anhydride include, for example, phosphorous +1 compounds, for example, hypophosphite compound or its salt, such as sodium hypophosphite; phosphorus +2 compounds, such as, a phosphonate compound, for example, phosphonic acids or their inorganic salts or ammonium, e.g. alkali(ne earth) metal salts; phosphorus +3 compounds, such as C₁ to C₄ dialkyl or trialkyl or phenyl phosphites or diphenyl phosphites; and orthophosphorous acid or salts thereof.

Forming the backbone polymers of the present invention from the precursor polymers comprises drying the precursor polymers at a temperature of 175 °C or higher, and up to 260 °C, preferably, 180 °C or higher, and, preferably, 230 °C or less, most preferably at up to 220 °C.

Preferably, drying the precursor polymers comprises drying under low shear and most preferably at zero externally applied shear of any melt.

Drying times are lower at higher temperatures and the preferred duration of the process is dependent on the amount of agitation of the melt. Drying in the presence of some shear generally means drying at a lower temperature than drying to form the same backbone polymer without shear, as in an oven. Thus, in the absence of agitation the duration of dehydration will generally range from 1 minutes to 8 hours, preferably, 10 minutes or more, or, preferably, 2 hours or less, more preferably, 15 to 75 minutes. In the case where initial drying is followed by heating, such as spray drying and further heating, the further heating takes place at the above recited temperatures for a period of from 2 minutes or more, or, up to 90 minutes, preferably, 70 minutes or less, more preferably, 10 to 45 minutes. In the case of agitated dehydration, such as in an extruder, the dehydration to the preferred level of acid conversion to anhydride (∼66.7 wt.% of methacrylic acid polymerized units) is achieved in 30 seconds to 5 minutes, preferably, in 3 minutes or less, more preferably, in 2 minutes or less. And the complete extrusion process is achieved in 7 minutes or less, preferably, 3 minutes or less with very low mixing.

Drying the precursor polymers to form methacrylic anhydride containing backbone polymers comprises any of several known methods. Suitable drying methods may include, for example, extrusion, such as in a single-screw or twin-screw extruder; kneading, such as in a single shaft or twin-shaft kneader reactor, banbury mixer, or a Buss-Kneader Reactor or Single screw reciprocating extruder/mixer; evaporation, such as in a wiped film evaporator or falling film evaporator vessel; heated mixing, such as in a continuous stirred tank reactor (CSTR) or single and twin-rotor mixers, for example, PLOUGHSHARE™ Mixers (Littleford Day Inc., Florence, KY), double arm mixers, sigma blade mixer, or vertical high intensity mixer/compounders; and spray drying or fluid bed drying, coupled additional higher temperature drying, such as drum dryers or belt dryers.

According to the present invention to make backbone polymers without anhydrides formed by crosslinking or backbiting of backbone polymers, the drying is carried out with no or as little agitation or shear as possible in an oven, or any extruder, kneader or kneader reactor comprising a low shear extruder. Low shear extruders may comprise any having at least one zone that expands in a direction transverse to the rotational axis of the extruder screw(s) and in a direction away from any devolatilizer in the low shear zone, any having a barrel with flights for biasing the melt toward the end of the barrel, single screw extruders, co-rotating twin-screw extruders and counter-rotating twin screw extruders, as well as extruders having more than one of these features such as single screw extruders having at least one zone that expands in a direction transverse to the rotational axis of the extruder screw(s) and in a direction away from any devolatilizer in the low shear zone or single screw extruders having a barrel with flights for biasing the melt toward the end of the barrel.

Preferably, a devolatilizing extruder containing one or more devolatilizing zones is used to dry the precursor polymer of the present invention and the fill level in the devolatilizing zone is less than 100% full and is operated in a manner such that there is less than or zero gauge pressure. This minimizes the risk of solid material leaving the screw channels and operates at a pressure such that any residual water volatilizes out of the extruder and results in advancing the equilibrium reaction to form additional anhydride functional groups along the polymer backbone.

The dried backbone methacrylic anhydride group containing polymer of the present invention is reacted at from 0 to 220 ºC or, preferably, from 15 to 140 ºC with an amine compound to form amic acid groups. This will open methacrylic anhydride rings on the backbone polymer. Because the heat used to dry the backbone polymer is so great, residual heat from drying may be relied upon to form amic acid groups.

After ring opening and amic acid formation on any backbone polymer, any remaining adjacent methacrylic acid groups on the backbone polymer are heated to ring close and form imide functionality at from 100 to 250 ºC, preferably, from 160 to 220 ºC. Such heating can take place for a period of from 30 seconds to 8 hours, or, preferably, from 2 min to 120 min, which is sufficient to convert from 90 to 100 wt. % of the methacrylic anhydride units on the backbone polymer to six-membered cyclic methacrylic imide groups where the molar ratio of amine groups (NH₂ in the amine compound used to make the imides to the molar ratio of carboxyl groups (COOH) in the backbone polymer is at least 0.9:1.0.

The same extruder can be used to prepare (drying) the methacrylic anhydride backbone polymer and to prepare (form amic acid and ring close) the six-membered cyclic methacrylic imide group containing backbone polymer from it; or separate extruders can be used. Suitable extruders are, for example, those made by Welding Engineers, American Liestritz, or Werner-Pfliederer.

Carboxylic anhydrides of methacrylic acid and their corresponding imides can form from the acidic functions of neighboring methacrylic acid polymerized units along a single polymer chain (cyclic), from acidic functions of distal acidic polymerized units along a single polymer chain (backbiting), or from acidic functions of separate polymer chains (crosslinking). Backbiting and crosslinking may interfere with polymer modification and flow. Preferably, the methacrylic anhydrides on the polymers of the present invention are cyclic and form from neighboring methacrylic acid polymerized units along a single polymer chain.

To form a six-membered cyclic methacrylic imide group containing polymer, the methacrylic anhydride group containing backbone polymer can be reacted with an amine containing compound in the same or different extruder as in which the backbone polymer is formed by drying, or a separate extruder; or it can be heated in a non-aqueous fluid medium, such as, for example, in a non aqueous aprotic solvent such as, for example, N,N-dimethylformamide, N,N-dimethylacetamide, N-methyl-2-pyrrolidone, or, preferably, N,N-dimethylacetamide, N-methyl-2-pyrrolidone.

Preferably, where drying or imidization takes place in an extruder, the extruder has a devolatilization zone to remove water of reaction from imide ring formation which enables imidization of the methacrylic anhydride group containing backbone polymer quickly, and allows use of relatively more water soluble amine compounds which more preferably, are used in anhydrous form, such as a C₁ to C₈ primary amine.

Reaction of methacrylic anhydride in the backbone polymers with amines to form the six-membered cyclic methacrylic imides may be done in a non-aqueous solution or in the melt phase; if done in solution phase, the reaction is preferably done stepwise by reacting with amine to form amic acid at about room temperature, followed by ring closing to form, in the case of amines, the imide by heating to 100 to 140 ºC. A ring closing agent, such as acetic anhydride and catalyst such an organic base like 3-picoline. may be used. The resulting polymers can then be reacted through their methacrylic acid or salt groups above.

Ether group containing side chains or may be formed as part of a C₆ cyclic methacrylic imide or as an amide on a methacrylic acid or its salt from an ether group containing amine, including an ether amine, diether amine, polyether amine, or a bis-amino ether compound, including any of bis-amino ether, bis-amino diether or bis-amino polyether. Suitable examples of ether group containing amines are polyetheramine, 2-ethoxyethylamine, any monoamine or bis-amine terminated polyether or dendrimer (polyamine terminated ether group containing compounds) comprising chains of CH₂-CH₂-O units, for example, from 1 to 500 such units, or, preferably, from 1 to 100 units, or, in hydraulic cements, preferably from 5 to 100 units. Examples of polyether group containing amines are mono- amine terminated polyethers (M-Jeffamine™ polymers, Huntsman International, LLC, Salt Lake City, UT), bis- or tris- amine groups terminating ends of the polyether chains (D and T series Jeffamine™ products).

Preferably, the ether group containing amine is a polyetheramine having at least 60 wt.% ethylene oxide groups (EO) as a percent of all ether groups, or, more preferably, at least 80 wt.% EO groups, and, most preferably, at least 90 wt.% EO groups.

By reaction of the pMAAn in the presence of any bis-amine or multi- amine terminated polyethers, one can to build very high molecular weight comb polymers. Suitable amine group containing compounds useful to build molecular weight through backbone polymer intermolecular bridging may be any poly (amine) material, e.g., polylysine, or combination of materials including ethylene diamine, 1,6-hexanediamine, 1,3,5-benzenetriamine, non-polyol materials such as amine terminated polydimethylsiloxanes (PDMS), such as XIAMETER™ OXO-04012 Dow Corning, Midland, MI), amine terminated polyolefins, and amine terminated block copolymers etc.

As the polymers of the present invention have methacrylic acid or salt groups as well as six-membered cyclic methacrylic imides, amine or alcohol compounds may be reacted onto the backbone polymer to form or attach other functional groups in the resulting polymer. Some or all of remaining methacrylic acid or salt groups can be esterified, converted to amide, converted to metal salt, such as with NaOH, converted to quaternary ammonium carboxylate or any combination of these. The salt may comprise any cation or combination of cations.

Reactions with further alcohol or amine compounds may be carried out between such compounds and the methacrylic acid or salt groups on the polymers of six-membered cyclic methacrylic acid imide (methacrylic imide).

Esterification or amidation needs less added heat when formed from methacrylic anhydride and the indicated alcohol and/or amine than ring closing to form imides. Esters and amides may be formed from methacrylic acid or salt groups and the indicated alcohol and/or amine at temperatures below 160 °C, or, preferably below 140 °C. When making esters from methacrylic acid or salt groups and indicated alcohol, catalysts may be used such as acid and lewis acid catalysts with examples being p-toluenesulfonic acid and titanium (IV) butoxide. In fact, the residual heat from drying and forming imides on the backbone polymers of the present invention is more than sufficient to drive the reaction to form esters or amides from residual methacrylic acids in backbone polymer and make polymers having ester or amide side chain groups and six-membered cyclic methacrylic imide groups.

Reactive alcohol or amine, preferably, primary amine, compounds for forming the methacrylic salt, quaternary ammonium, ester, or amide groups of the present invention are alcohol or amine terminated, preferably containing one alcohol or amine group. Such compounds can be terminated at their other end with a alcohol, amine or other species reactive to the backbone polymers. Preferably, any reactive species other than amine or alcohol are unreactive towards the acid, salt or anhydride on the backbone polymer and therefore be available for further reaction with a third component. Such species may be, for example, an anhydride, vinyl, or carboxylic acid group containing compound.

Where the methacrylic acid on the backbone polymer is alkyl group functionalized, an ester may be formed with alkyl alcohol wherein alkyl chain has a linear chain length of at least 6 carbons and up to 500 carbons, or, preferably, at least 30 carbons, and, most preferably, up to 250 carbons. The alkyl alcohol may contain a distribution of chain lengths such as those present in UNILIN™ alcohols supplied by Baker Hughes (Houston, TX) may be used, preferably, a C₅₀ alcohol (Unilin™ 700 alcohol).

Examples of hydrophobic group forming alcohols and amine compounds include fatty alcohols or fatty amines having a C₁ to C₅₀₀, or, preferably, a C₆ to C₂₅₀ alkyl group; olefinic alcohols or amines, such as amine terminated polyolefins, and amine terminated block copolymers or oligomeric olefins terminated with an alcohol or amine; anilines or cyclohexylamines. Further, alcohol or amine terminated C₁ to C₅₀₀, or, preferably, C₆ to C₂₅₀ compounds can contain a cycloaliphatic or aryl groups along a hydrocarbon chain or as a pendant group on a hydrocarbon chain. Amine containing, preferably, amine terminated polydiorganosiloxanes, vinyl polymers, olefin block copolymers, and polyamides may also be used

Examples of polyolefin group containing materials may include amine terminated polyolefins where the polyolefin is, for example, polyethylene, an ethylene/alpha-olefin copolymer wherein the alpha-olefin is butane or a higher alkyl group, or a block copolymer or a pseudo-block copolymer as described in any of US Patent Nos. 7,608,668, 7,947,793, or 8,124,709, polypropylene, ethylene/propylene copolymers or block copolymers or pseudo block copolymers, as described in any of U.S. Patent Nos. 8,106,139, or 8,822,599.

Examples of polysiloxanyl group containing amine compounds or alcohols are amine terminated polydimethylsiloxanes, polydimethylsiloxy ethanols, polydimethylsiloxy methanols, amine terminated polydiphenylsiloxanes and amine terminated polymethylphenylsiloxanes.

Examples of reactive salt forming materials are the quaternary ammonium compounds disclosed above.

Alternatively, the polymers of the present invention may be made by partially amidating phosphorus acid group containing polymethacrylic acid precursor polymers, e.g., spray dried polymethacrylic acid, with an amine compound at anywhere from room temp up to 100 °C, and then heating the amidated product to temperatures sufficient to ring close (100 to 250 °C) neighboring carboxylic groups and yield, respectively, the imide N-substituent functionality on the backbone polymer.

The compositions of the present invention may be used for several uses including but not limited to: For plastics: Adhesion promoters, surface modifiers to enhance slip, printability or coatability, compatibilizers, both reactive and not, and modulus boosters; for other compositions: Viscosifiers (thickening) for water containing or aqueous compositions, viscosifiers with biocidal activity, and dispersants. In the ionomer form, the polymers of the present invention are particularly suitable as tackifiers in the polymer melt.

Compositions comprising quaternary ammonium salts of the carboxylic acid groups on the backbone polymer, such as from didodecyl dimethyl ammonium bromide, is of particular use in oil and gas production activities many of which, including tracking and several forms of enhanced oil recovery, require biocidal activity and water to have increased viscosity.

Examples: The following examples illustrate the present invention. Unless otherwise indicated, all parts and percentages are by weight and all temperatures are in °C.

Test Methods: In the Examples that follow, the following test methods were used:
Titration: The number of methacrylic anhydride groups present or produced on a given polymer or a corresponding methacrylic anhydride polymer as a percentage of total methacrylic acid units in the polymer was determined by titration First, the total free carboxylic acid content was measured by hydrolysis of the anhydride. A 0.1-0.2 g of each material was measured and put in a 20 ml glass vial. To this, 10 ml of deionized (DI) water was added and the closed vial was heated in 60°C oven for 12 h. After 12 h, the vial was titrated against 0.5 N KOH (aq.) to determine acid number of the thus hydrolyzed polymethacrylic anhydride polymer (the total free carboxylic groups in the polymer). Next, the anhydride content was determined by reacting the same pMAAn material in its unhydrolyzed state with methoxy propyl amine (MOPA). MOPA opens the anhydride and reacts with one side, the other side is converted back to a carboxylic acid. For each polymer tested, 0.1-0.2 g of each pMAAn material along with 10 ml of tetrahydrofuran (THF) and 0.2-0.3 g of MOPA was added to a 20 ml glass vial equipped a with magnetic stirrer bar. The vial was closed and the mixture was stirred at room temperature overnight (about 18-20 h). Following this 10 ml of DI water was added and mixture was titrated against 0.5 N HCL (aq.) to determine the anhydride content. Titration was used to determine the overall disappearance of carboxylic acid in the polymer which indicates the conversion of carboxylic acid groups to anhydride. The calculated percentage of COOH (acid groups) converted into anhydride = (mols of anhydride in 1 g of polymer sampled) / (Total mols of -COOH in 1 g of hydrolyzed polymer sampled) * 100. Instrument: Titralab TIM865 Titration Manager (Radiometer Analytical SAS, France); Reagents: 0.5 N KOH. 0.5 N HCI, Tetrahydrofuran (Sigma Aldrich. St Louis, MO).

Methacrylic Imide Presence Verified by FTIR: For each polymethacrylic imide group containing polymer, the conversion of some or substantially all of the methacrylic anhydride groups in a corresponding methacrylic anhydride backbone polymer into methacrylic imide groups was confirmed by FTIR of the methacrylic imide group containing polymer itself.

FTIR: As indicated in the relevant example, and, as described above.

Synthesis Example 1: Methacrylic Anhydride Group Containing Backbone Polymer With 66.7 Wt.% Of Methacrylic Anhydride Groups Spray dried hypophosphite group containing polymethacrylic acid (pMAA) having an Mw of ∼5K was heated under vacuum (pressure 17 mm Hg). for 4 hrs. at 200 ºC. The spray dried material remains melted at about 185 ºC and the melt is not agitated during the dehydration process. After cooling under vacuum the now solid mass is crushed and stored in anhydrous conditions. The resulting backbone polymer material has 66.7% of the polymerized methacrylic acid content been converted to anhydride, as determined by titration. The material contains equal moles of anhydride functionality and carboxylic functionality.

Inventive Example 1: Reaction of the Polymer of Synthesis Example 1 and Monoamine Terminated Polydimethylsiloxane In a nitrogen atmosphere, poly(methacrylic acid-co-methacrylic anhydride) (2.00 g, 8.32 mmol anhydride, from Synthesis Example 1) and a magnetic stir bar were loaded into 3-neck, 50 ml round bottom flask with flask placed under slow nitrogen sweep via inlet and outlet adaptors and sitting in a heating mantle controlled by a variable transformer. Anhydrous N,N-dimethylacetamide (11.6 ml), and toluene (22.6 ml) were added to the flask. A Dean-Stark trap with condenser was attached to the flask outlet and was insulated. The flask was heated with 10 ml of toluene distilled and drained from the Dean-Stark trap and was cooled to room temperature and monoamine terminated polydimethylsiloxane (MCR-A11 polymer, Gelest, Morrisville, PA, 0.416 g, 0.416 mmol) was added to the flask and stirred overnight at room temperature. Dean-Stark trap was filled with toluene and flask's contents was refluxed at for 4 hours. Flask was cooled to room temperature with 3-picoline (0.04 ml) and acetic anhydride (0.36 ml) added to the flask and stirred overnight at room temperature. Solvents and volatile reagents were vacuum stripped in a ∼90 °C vacuum oven leaving a white solid N-polydimethylsiloxy group containing six-membered cyclic methacrylic imide polymer in a polytetrafluoroethylene dish.

FTIR method B) of the polymer shows imide bands at 1802 cm⁻¹ and 1759.6 cm⁻¹. (from "The Chemist's Companion", A.J. Gordon and R.A. Ford, John Wiley & Sons (1972)), carboxylic acid carbonyl seen as shoulder at 1731.8 cm⁻¹ and bands in region of 1100-1000 cm⁻¹ that are consistent with PDMS incorporation, as is strength of band at 2942.8 cm⁻¹ (Malaysian Polymer Journal, Vol. 4, No. 2, pp. 52-61 (2009).

Inventive Example 2: Esterification of Product from Synthesis Example 1 with alkyl alcohol Into a 3-neck, 50 ml round bottom flask was loaded *p*-toluenesulfonic acid monohydrate (0.15 g, 0.79 mmol), product from Inventive Example 1 (2.25 g), and UNILIN™ 350 saturated, long chain, linear primary alcohol (Baker Petrolite Polymers, Sand Springs, OK, equivalent weight 435) (7.29 g). Flask was placed under gentle nitrogen sweep via inlet and outlet adaptors. A stir-shaft with a polytetrafluorethylene blade and stir bearing was inserted into flask for overhead stirring. Flask was immersed in temperature controlled oil bath for 1 hour at 100 °C, then 24 hours at 160 °C, and 24 hours at 200 °C. The product hydrophobic alkyl ester group containing N-polydimethylsiloxy substituted backbone polymers of C₆ cyclic methacrylic imide was poured while hot into container leaving an off-white, hard solid upon cooling to room temperature. FTIR method B) of the polymer shows imide bands remaining at 1805cm-1 and 1762.7cm-1; and string ester carbonyl at 1729.9cm-1 and bands in 1050-1260cm-1 consistent with esterification with Unilin. (REF: The Chemist's Companion", A.J. Gordon and R.A. Ford, John Wiley & Sons (1972)).

Synthesis Example 2: Methacrylic Anhydride Group Containing Backbone Polymer With 92.3 Wt.% Of Methacrylic Anhydride Groups The polymer was manufactured as described in US Patent No. 8,859,686, except that this material was subject to a second heat stage. A Haake PolyLab System™ (Model P300) mixer (Thermo Fisher Scientific, Tewksbury, MA) comprising control of temperature and rotor speed, was used, made up of a Haake Rheomix™ 600P mixer fitted with a R600 bowl (120mL chamber volume, excluding rotors; about 65mL volume with rotors installed), in turn fitted with co-rotating (Rheomix™ 3000E) roller rotors (Thermo Fisher Scientific) geared at a 3:2 ratio, a Haake Rheocord™ used to measure the torque established between the rotors, and Polylab™ Monitor V 4.18 control software provided as part of the system and used to control rotor speed, temperature and record torque, equipment and melt temperature. A mixing bowl was made of 301 stainless steel - DIN 1.4301 (SS-301, AK Steel Corp., West Chester, OH); the rotors were made of 316 stainless steel - DIN 1.4408 (SS-316, AK Steel Corp.).

A 35g sample of powdered, spray dried hypophosphite group containing polymethacrylic acid (pMAA) having an Mw of ∼5K was introduced to the mixing bowl which was stabilized at 185 °C via a removable funnel. The screw speed was set to 50 PRM. The bowl temperature set points (i.e. all three) were set to 190°C. After the polymer had melted, shown by a spike in torque, a second 15g batch of the pMAA was added; this was accompanied by a second torque spike. A nitrogen purge was implemented after the second batch of pMAA had melted to prevent the light powder from being blown out of the chamber; mixing was then continued at 190 °C for 10 minutes. Thereafter, the temperature was raised to 225 °C and run for 30 minutes. Rotor speed was reduced to 3 RPM and the immediately thereafter Haake bowl was removed while hot and the polymer inside removed and cooled before packaging. This step was done in ambient conditions and thus the hot material was exposed to moisture in the atmosphere. The material was removed from the bowl while still in a softened state. After cooling, the material removed from the Haake bowl was, in all cases, very brittle, with a fibrous texture. A second batch was made as above and the batches combined. The combined methacrylic anhydride backbone polymer (pMAAn) batches were remixed in clean a Haake bowl as follows:
The Haake bowl was stabilized at 185 °C, 35g of powdered pMAAn (combined batches were ground together with mortar and pestal) was introduced to the bowl via the removable funnel. The screw speed was set to 50 PRM. The bowl temperature set points (i.e., all three) were set to 190 °C. After the pMAAn backbone polymer had melted, shown by a spike in torque, the second 15g batch of pMAAn was added; this was accompanied by a second torque spike. A nitrogen purge was implemented, and - mixing continued at 190 °C for 10 minutes. Then, the temperature was raised to 225 °C and run for 30 minutes; the rotor speed was reduced to 3 RPM and the immediately thereafter Haake bowl removed while hot and the polymer inside removed and cooled before packaging.

Titration of the resulting polymethylacrylic anhydride backbone polymer was found to contain 92.28 wt.% anhydride (i.e., of the original carboxylic acid, 7.72% remained as acid, the remainder being in anhydride form), based on the total weight of methacrylic acid polymerized units in the polymer.

Inventive example 3: Reaction of Poly(methacrylic acid-*co*-methacrylic anhydride) of Synthesis Example 2 with polyetheramine (∼19 EO groups). Into a 3-neck, 250 mL round bottom flask with Dean-Stark trap and condenser under a slow nitrogen stream along with a magnetic stir bar was loaded anhydrous 1-methyl-2-pyrrolidone (100 ml) and the poly(methacrylic-co-methacrylic anhydride) of Synthesis Example 2 (1.535 grams). The apparatus was insulated, placed in a variable transformer controlled heating mantle sitting on a magnetic stir plate. Flask was gently warmed to dissolve polymer and is then cooled to room temperature. A Jeffamine™ M1000 polyetheramine (Huntsman Int'l LLC, 7.40 grams) was injected into the flask and stirred at room temperature under nitrogen for 72 hours. Toluene was loaded into the apparatus with 20 ml added to the Dean Stark trap and 25 ml added to the flask. Toluene was refluxed for 2.5 hours and then distilled and drained from the Dean-Stark trap. The resulting mixture was added to diethyl ether with product settling. Diethyl ether was decanted and product was reslurried in fresh diethyl ether with ether layer decanted four times more. Product was dried in a 70 °C vacuum oven. Dried product was mixed with KBr to prepare a pellet for FTIR.

Inventive Example 4: Reaction Of Poly(Methacrylic Acid-Co-Methacrylic Anhydride) Of Synthesis Example 1 With Polyetheramine (∼19 EO groups). Into a 3-neck, 500 mL roundbottom flask with Dean-Stark trap and condenser under a gentle nitrogen stream along with a magnetic stir bar was loaded 1 -methyl-2-pyrrolidione (278.7 grams) and toluene. Apparatus was insulated, placed in variable transformer controlled heating mantle sitting on a magnetic stir plate. Toluene was distilled into the Dean-Stark trap and subsequently drained. Flask was cooled under nitrogen to room temperature and the poly(methacrylic-co-methacrylic anhydride) (10.69 grams) from Synthesis Example 1 was added to flask with flask contents warmed to about 180 °C to dissolve the polymer. Flask's contents are cooled to about room temperature with warm JEFFAMINE™ M1000 (40.04 grams) polyethermonoamine (Huntsman) injected into the flask and stirred overnight at room temperature. Toluene (45 mL) was added to the flask and flask was warmed to reflux for 5 hours into the Dean-Stark trap, then toluene was drained off. Reaction mixture was cooled to room temperature. Remaining solvent was stripped from product in warm vacuum oven with product being a clear, light yellow, viscous liquid while warm.

Inventive Example 5: Reaction Of Poly(Methacrylic Acid-Co-Methacrylic Anhydride) Of Synthesis Example 1 With Polyetheramine (∼19 EO groups) (alternative method) Into a 3-neck, 100 mL roundbottom flask with magnetic stir bar and fitted with inlet adaptor, stopper, and Dean-Stark trap with condenser and outlet adaptor was loaded N,N-dimethylacetamide (50 mL) and toluene (15 mL) with apparatus under a slow nitrogen sweep. Toluene was distilled and drained from the Dean-Stark trap. Poly(methacrylic acid-co-methacrylic anhydride) of Synthesis Example 1, 2.10 grams, was added to the flask and warmed to dissolve in the N,N-dimethylacetamide to a temp of about 120 °C. To the ambient temperature solution was added the Jeffamine™ M1000 (6.90 grams) polymer. Mixture was stirred overnight at ambient temperature. Toluene was placed in the flask (10 mL) as well as filling the Dean-Stark trap. Toluene was refluxed for about 9 hours with toluene and water drained from the trap. Product solution has solvent removed in a 100 °C vacuum oven. Inherent viscosity of product = 0.111 dL/g (30.0 °C, 0.50 g/dL, N-methyl-2-pyrrolidinone).

Inventive Example 6: Reaction of Poly(Methacrylic Acid-Co-Methacrylic Anhydride) Of Synthesis Example 1 With Polyetheramine (∼19 EO groups) and a bis-amine polyether (∼3 PO groups) Into a 3-neck, 100 mL roundbottom flask with magnetic stir bar and fitted with inlet adaptor, stopper, and Dean-Stark trap with condenser and outlet adaptor was loaded N,N-dimethylacetamide (50 mL) and toluene (15 mL) with apparatus under slow nitrogen sweep. Toluene was distilled and drained from the Dean-Stark trap. Poly(methacrylic acid-co-methacrylic anhydride)(50/50 mole/mole, 2.10 grams) from Synthesis Example 1 was added to the flask and warmed to dissolve in the N,N-dimethylacetamide to a temperature of about 120 °C. To the ambient temperature solution was added Jeffamine™ D230 (0.196 grams) bis-amino polyether (Huntsman) and 6.5 hours later Jeffamine™ M1000 (6.94 grams) polyetheramine was added to the solution. Mixture was stirred overnight at ambient temperature. Toluene was placed in the flask (10 mL) as well as filling the Dean-Stark trap. Toluene was refluxed for about 9 hours with toluene and water drained from the trap. Product solution has solvent removed in a 100 °C vacuum oven. Inherent viscosity of product = 0.124 dL/g (30.0 °C, 0.50 g/dL, N-methyl-2-pyrrolidinone).

Inventive Example 6 demonstrates the increasing of molecular weight by use of small amount of a bis-amine polyether (Jeffamine™ D230 polymer) comprising a propylene oxide polyether. The increase in molecular weight was demonstrated by measuring inherent viscosity. Inventive Example 5 was a direct comparison as the method of reacting was the same except no D230 was used. The inherent viscosity increased from 0.111 dUg (example 2) to 0.124 dL/g (Example 3) indicating that an increase in molecular weight occurred which amounted to more than a 10 % increase.

All FTIR (method B) spectra for all Examples 3, 5 and 6 are shown in Table 1, below.

**Table 1: FTIR Data from Comb Polymers**

| **I-Example 3** | | | **I-Example 5** | | | **I-Example 6** | | |
|---|---|---|---|---|---|---|---|---|
| Band | Strength | Assignment | Band | Strength | Assignment | Band | Strength | Assignment |
| | | | | | | | | |
| -- | | | 1801 | W | Cyclic anhydride C=O | 1801 | W | Cyclic anhydride C=O |
| -- | | | 1760 | S | Cyclic anhydride C=O | 1759 | S | Cyclic anhydride C=O |
| 1718 | M | Imide C=O | 1723 | S | Imide C=O | 1720 | S | Imide C=O |
| 1670 | S | Imide C=O | 1671 | VS | Imide C=O | 1672 | VS | Imide C=O |

In Table 1, above, VS = very strong, S= Strong, M=Medium and W= weak, indicating to a degree the amount of each functional group shown. As the Table shows, all inventive comb polymers comprise at least a six membered cyclic methacrylic imide group. The strength of the peaks showing the presence of cyclic imide groups in the polymers of Examples 5 and 6 suggests that there would be more imide groups in those preferred polymers than in the polymer of Example 3. Also, the cyclic anhydride presence in the polymer of Examples 5 and 6 but not in the polymer of Example 3 suggests that polymers with the preferred amount of less than 70 wt.% of imides and anhydrides have more cyclic anhydrides.

Inventive Example 7: Reaction of the backbone polymer of Synthesis Example 1 with -10% polyetheramine (∼19 EO groups): Into a 3-neck, 100 ml roundbottom flask with magnetic stir bar and fitted with inlet adaptor, stopper, and Dean-Stark trap with condenser and outlet adaptor was loaded N,N-dimethylacetamide (50 ml) and toluene (15 ml) with apparatus under slow nitrogen sweep. Toluene was distilled and drained from the Dean-Stark trap. The poly(methacrylic acid-co-methacrylic anhydride)(50/50 mole/mole, 2.10 grams) of Synthesis Example 1 was added to the flask and warmed to dissolve in the N,N-dimethylacetamide at about 120 °C. To the ambient temperature solution was added Jeffamine™ M1000 polyetheramine (Huntsman Int'l. LLC, 0.87 grams) was added to the solution. Mixture was stirred overnight at ambient temperature. Toluene was placed in the flask (10 mL) as well as filling the Dean-Stark trap. Toluene was refluxed for about 9 hours with toluene and water drained from the trap. Product solution has solvent removed in a 100 °C vacuum oven leaving a glassy solid with recovered yield of 2.75 grams. Solution of final product was cast on a polytetrafluoroethylene (PTFE) card for FTIR collection.

The FTIR (method B) showed strong anhydride bands, which are stronger than the imide bands; and, also shows a strong carboxylic acid peak. Because less polyetheramine or amine reactant was used in Inventive example 7 than in Inventive Example 5, the peaks of the FTIR spectra indicating imides in the Inventive Example 7 comb polymer were not as pronounced as in the Inventive Example 5 comb polymer. See Table 2, below.

**Table 2: FTIR Results**

| **Example** | **Band (cm-1)** | **Strength** | **Assignment** |
|---|---|---|---|
| **IE_3** | 1718 | M | Imide C=O |
| | 1670 | S | Imide C=O |
| **IE_5** | 1801 | W | Cyclic anhydride C=O |
| | 1760 | S | Cyclic anhydride C=O |
| | 1723 | S | Imide C=O |
| | 1671 | VS | Imide C=O |
| **IE_6** | 1801 | W | Cyclic anhydride C=O |
| | 1759 | S | Cyclic anhydride C=O |
| | 1720 | S | Imide C=O |
| | 1672 | VS | Imide C=O |
| **IE_7** | 1801 | S | Cyclic anhydride C=O |
| | 1759 | VS | Cyclic anhydride |
| | 1730 | M | Imide C=O |
| | 1701 | W-Shldr | Carboxylic acid C=O |
| | 1672 | W-Shldr | Imide C=O |

Inventive Example 8: Esterified Methacrylic Imide Polymer Containing Hexyl Group Hydrophobic Side Chain Alcohols of A Variety of Lengths Into a 3-neck, 500 ml round bottom flask with magnetic stir bar and attached a Dean-Stark trap with condensor with a gentle N₂ sweep via inlet and outlet adaptors was loaded N,N-dimethylacetamide (275 ml) and toluene (25 ml). Toluene was distilled and drained from the Dean-Stark trap. The polymethacrylic anhydride polymer from Synthesis Example 1 (21.38 g, 88.96 mmol anhydride) was added to the flask with gentle warming to about 120 °C to dissolve the polymer and the solution was cooled to room temperature and hexylamine (8.10 g, 80.0 mmol) was added to the flask and stirred overnight at room temperature. Toluene (45 mL) was added to the flask and brought to reflux for 5 hours. Reaction mixture was cooled to room temperature with p-toluenesulfonic acid monohydrate (0.05 g) in N,N-dimethylacetamide (0.5 ml) added to flask with toluene refluxed for 2 hours. Reaction mixture was cooled to room temperature and acetic anhydride (15.2 mL) and 3-picoline (1.7 mL) were added to flask and stirred overnight at room temperature. The imide containing polymer product was isolated by removing solvents and volatiles by vacuum at 70 °C and 16.0 g (55.8 mmol acid) of the polymer was loaded into a 3-neck, 100 mL roundbottom flask with a gentle N₂ sweep via inlet and outlet adaptor along with p-toluenesulfonic acid monohydrate (0.40 g, 2.1 mmol), and UNILIN™ 350 alcohol (21.84 g, 50.2 mmol alcohol, Baker Petrolite Polymers, Equivalent weight 435,). A glass stir-shaft with polytetrafluorethylene (PTFE) blade and bearing were inserted into flask for overhead stirring, and the flask was immersed in 100 °C oil bath for 1.2 hours with stirring started after the amine alcohol melted. The bath temperature was raised to 160 °C with stirring continued under N₂ sweep for about 24 hours. Recovered product yield was 34.0 grams. For FTIR, aliquot of product was dissolved as 10% solids in toluene at ∼70 °C with warm solution deposited on a PTFE IR card with card dried in a 70 °C vacuum oven for 1 hr.

The FTIR spectrum of the resulting polymer shows that the anhydride carbonyl bands at 1803cm⁻¹ and 1761cm⁻¹ are no longer present and, as shown by the imide bands at 1719cm⁻¹ and 1671cm⁻¹, the hexyl imide was formed. The ester carbonyl at 1721 and is overlapping with the weaker imide band. Considering the reduction in intensity of the broad OH bands in the 3500 cm-1 region, the intense bands at 2918cm⁻¹ and 2849cm⁻¹ are evidence of the presence of the hydrocarbon CH₂ from alkyl ester side chain groups

Synthesis Example 3: Methacrylic Anhydride Group Containing Backbone Polymer A 5,000 Mw hypophosphite pMAA solution homopolymer of 42 wt.% solids was dried at 150 °C for 1.5 hours. The dried pMAA was pulverized and put in an oven at 200 °C for 30 minutes to convert to the anhydride. Previous methacrylic anhydride group containing polymers made in this way contain from 55 to 60 wt.% of the methacrylic acid polymerized units in the form of anhydride groups. See U.S. Patent Publication No. 2014/0323743 to Rand.

Inventive Example 9: Methacrylic Anhydride Group Containing Polymers With Octadecylimide Hydrophobic Side Chains 54.33 grams of octadecylamine (99% w/w, Aldrich Chemicals, St. Louis, MO) and 60.0g (100% solids) of the polymethacrylic anhydride homopolymer of Synthesis Example 3 were charged to a 500 mL 3-neck flask equipped with a with stirrer, thermocouple, and a condenser under a slow N₂ gas blanket. A Jack-o-matic™ stand (Glas-Col, Terre Haute, IN) and a heating mantle was used to heat the reactor. The nitrogen blanket was put on the reactor and the mixture was heated, with stirring initiated when the octadecylamine melted. The reaction was carried out at 180 °C for 5 minutes before solidifying. FTIR (method A) was run and confirmed imide formation by the strong peak at 1665cm⁻¹, suggesting a six-membered cyclic methacrylic imide group.

Inventive Example 10: Methacrylic Anhydride Group Containing Polymers With Octadecylamine Amide Hydrophobic Side Chains 36.22 grams of octadecylamine (Aldrich >99%, 100% solids) was charged to a 500 mL 3-neck flask equipped with a stirrer, thermocouple, and a condenser under a slow N₂ gas blanket. A Jack-o-matic™ stand (Glas-Col, Terre Haute, IN) and heating mantle was used to heat the reactor. The nitrogen blanket was put on the reactor and the mixture was heated, with stirring initiated when the octadecylamine melted 40.0g of a 100% solids polymethacrylic anhydride from Synthesis Example 3 was added. The molten material was heated with a target of 120 °C, where the reaction ran for 5 hours. FTIR (method A) was run on the material as confirmed the presence of amide group by the peak at 1566cm⁻¹ which represents the C-NH stretching vibration.

Synthesis Example 4: Methacrylic Anhydride Group Containing Backbone Polymer A 16,000 Mw hypophosphite pMAA solution polymer of 40% solids was dried at 150 °C for 2 hours. The dried pMAA was pulverized and put in a vacuum oven at 200 °C for 90 minutes under -15 mm Hg to convert to the anhydride. Such polymers have a methacrylic anhydride group content of -84 wt.% of all methacrylic acid polymerized units in the polymer, as shown by titration.

Inventive Example 11: Methacrylic Anhydride Group Containing Polymers With Octadecylamine Imide Hydrophobic Side Chains 72.44 grams of octadecylamine (99% w/w, Aldrich Chemicals, St. Louis, MO) and 80.0g (100% solids) of a polymethacrylic acid anhydride (synthesis example 4) were charged to a 500 mL 3-neck flask equipped with a with stirrer, thermocouple, and a condenser under a slight N₂ gas blanket. A Jack-o-matic™ stand (Glas-Col, Terre Haute, IN) and a heating mantle was used to heat the reactor. The slight nitrogen blanket was put on the reactor and the mixture was heated, with stirring initiated when the octadecylamine melted. The reaction was stopped on the ramp up to 180 °C at roughly 150 °C due to the material solidifying and becoming unworkable. FTIR was run and confirmed imide formation by the strong peak at 1665cm⁻¹.

### Example 12: Amphiphilic Copolymers As Additives In Polymers Boost Modulus

A total of 15g LLDPE (homogeneous ethylene octene copolymer, Melt Index (I₂) = 1 g/10min (ASTM 1238-13, 2013); density = 0.909 g/cm2 (ASTM D792-13, 2013)) and 0.79 g of the polymer of Inventive Example 9 were added to 150 ml of xylene and the mixture was stirred at 90 °C under N₂. The mixture became visually homogenous after 2 days. When still hot, the solution was slowly poured into 1.5 L of cold acetone. A white precipitate was produced. The precipitate was filtered and dried under vacuum at 65 °C overnight.

To eliminate any possible effect of precipitation on resin properties when comparing the blend with pure LLDPE, 15 g of the LLDPE pellets were run through the same dissolution-then-precipitation process. This resin was used as a control. There were a total of three resin samples thus prepared:
Demonstration Example 1A: A Blend (LLDPE + 5 wt.% six-membered cyclic methacrylic imide backbone polymer with alkyl side chains);
Comparative Example 2A: LLDPE precipitated; and,
Comparative Example 3A: LLDPE pellets used as is.

Sample plaques of 1 mm in nominal thickness were made with all three resin Examples using compression molding at 190 °C in the same apparatus. Tensile tests were run on these plaques according to ASTM D1708-13 (2013) using an Instron Model 5565 (Instron, Norwood, MA). Optical properties of the plaques (i.e., transmittance and haze) were measured on a BYK Gardner haze-gard plus™ digital hazemeter (BYK-Gardner GMBH, Geretsried, Germany) in accordance with procedures specified in ASTM D1003-13 (2013). The results are shown in Table 3, below:

**Table 3: Modulus Test Results for LLPDE blends with the Amphiphilic Comb Polymer**

| **Example** | **Mechanical** | | **Optical** | | |
|---|---|---|---|---|---|
| | **Modulus (MPa)** | **Elongation at Break (%)** | **Thickness (µm)** | **Transmittance (%)** | **Haze (%)** |
| **1A** | 154 ± 2 | 777 ± 20 | 875 | 87.2 | 45.7 |
| **2A*** | 121 ± 4 | 788 ± 32 | 810 | 89.0 | 20.8 |
| **3A*** | 123 ± 6 | 806 ± 52 | 873 | 89.2 | 25.9 |

| | | | | | |
|---|---|---|---|---|---|
| *- denotes Comparative Example. | | | | | |

The results of the mechanical testing clearly suggest that the blend exhibits 27% of modulus boost over pure LLDPE without any significant compromise in elongation. The result of the optical measurements shows increased haze but no significant change in transmittance when the inventive comb polymer is used at a 5 wt.% loading, based on the total polymer solids in the blend.

### Example 13: Application Of Material From Inventive Example 2 To Surface Of Polyethylene To Reduce Surface Energy

Materials: Polyethylene (PE 1, DOWLEX™ 2045 polymer, Dow Chemical, Midland MI, M.I. (I₂): 1 g/10min, density: 0.920 g/cm³); Affinity™ PL 1840G olefin polymer (PE2, Dow Chemical, M.I. 1 g/10min, density 0.911 g/cm³); and, polydimethylsiloxane (PDMS reference: Sylgard™ 184 polysiloxane Dow Corning, Midland MI).

Sample prep: PE Plaques were compression molded on Carver Auto Series hydraulic press (Model 4095, Wabash, IN) by taking 8g PE pellets at 1,361 kg (3,000Ib) force for 3min at 190 °C; then, 4,536kg (10,000Ib) force for 3min at 190 °C; then, 9,072kg (20,000Ib) force for 1min at 190 °C to produce a plaque 0.5 mm (0.02 in) thick. The polymer of Inventive Example 2 was heated in an oven to 110 °C to melt the PDMS, and about 2g was then applied to and spread on the PE plaque using a spatula. The coated PE plaque was then cooled to room temperature. The surface coated plaques were then placed between Mylar™ polyester (127 micron (5 mil) General Purpose Oriented Polyester, Transilwrap Co. Franklin Park, IL) sheets, and compression molded with the same Carver press at 80 °C, at ∼181kg (400 lb.) force for -15 seconds. After cooling, the polyester was peeled from the side of the plaque with the polymer of inventive Example 2, and the surface energy was measured. Also, a glass substrate (FisherFinest microscope slide (plain) 25mm x 75mm x 1mm (Fisher Scientific, Pittsburg, PA)) was coated with the polymer of Inventive Example 2 using an Elcometer (Elcometer Inc., Rochester Hills, MI) K4340M120 electrically heated, perforated vacuum table, fitted with Elcometer KT004340N101 casting arm and Gardco Microm™ II Film 9" casting blade (Paul N. Gardner Co., Pompano Beach, FL) at 100 °C fitted with 0.152mm (6mil) shims.

As shown in Table 4, below, the following results were obtained demonstrating that the inventive material successfully changes the surface energy on polyethylene substrates.

The following test was used to measure surface energy: A Dataphysics OCA20 contact angle/ surface tensiometer (DataPhysics Instruments GmbH, Filderstadt, DE) was used to test solvents (water, formamide, 1-bromonaphthalene) which have varying polar and dispersive characteristics; and the Owens Wendt model, J. Applied Polymer Science, 13, 1741 (1969)), the polar and dispersive components of the total surface energy were extracted for the film. Five drops (2uL) for each solvent above were taken on each surface test and the contact angle fitting using a circle method. One test was performed for each solvent on each substrate tested. When the angles found were inserted into the Owens Wendt equation and a linear regression performed, the slope and y-intercept give the dispersive and polar components of the substrate surface energy, respectively.

**Table 4: Lowering of Surface Energy by Inventive Polymers**

| **Substrate** | **Surface Energy (mN/m)** |
|---|---|
| Polyethylene PE 1 | 35.1 |
| Polyethylene PE 2 | 34.7 |
| PDMS | 19.8 |
| Inventive Example 2 polymer on PE 1 | 29.7 |
| Inventive Example 2 polymer on PE 2 | 29.3 |
| Inventive Example 2 polymer on Glass | 28.3 |

Attempts to peel the inventive material away from either polyethylene substrate were unsuccessful, indicating that the alkyl ester side chain groups in the inventive six-membered cyclic methacrylic imide polymer with an N-PDMS substituent successfully adhered to the polyethylene.

## Claims

1. A polymer composition of one or more phosphorus acid group containing, polymers of six-membered cyclic methacrylic acid imide comprising a backbone polymer having one or more one methacrylic acid, methacrylic acid salt, quaternary ammonium group, ester side chain group or amide side chain group, wherein the backbone polymers comprise from 60 to 100 wt.%, based on the total weight of monomers used to make the backbone polymer, of total methacrylic acid polymerized units, regardless of their form, and wherein a total of from 7.5 to less than 70 wt.% of the methacrylic acid polymerized units comprise six-membered cyclic methacrylic anhydride groups and six-membered cyclic methacrylic imide groups formed from the methacrylic anhydride groups, the number of methacrylic anhydride groups determined by titration of the backbone polymers prior to forming the six-membered cyclic methacrylic imide groups in the backbone polymers,
wherein the polymers are substantially linear, meaning that they have less than 3% of imide or anhydride groups, based on the amount of methacrylic anhydrides as determined by titration of the backbone polymer of methacrylic anhydride used to make the polymer, that form crosslinks or intrachain backbite links along the backbone polymer; and
wherein the polymers have on average at least one phosphorus atom in the backbone of the polymer that is bound to a carbon atom as a terminal or pendant group; and wherein the titration is carried out according to the description.

2. The polymer composition as claimed in claim 1, wherein the phosphorus acid group is a hypophosphite group.

3. The polymer composition as claimed in claim 2, wherein the one or more phosphorus acid group containing polymers of six-membered cyclic methacrylic imide comprise from 1 to 20 wt.% of a hypophosphite compound or its salts, based on the total weight of phosphorus acid group containing and monomer reactants used to make the backbone polymer of the polymer.

4. The polymer composition as claimed in claim 1, wherein the backbone polymers comprise from 90 to 100 wt.%, based on the total weight of monomers used to make the backbone polymer, of total methacrylic acid polymerized units.

5. The polymer composition as claimed in claim 1, wherein from 50 to 68 wt.%, or, more preferably, from 60 to 66.7 wt.%, of the methacrylic acid polymerized units in the backbone polymer comprise methacrylic anhydride groups or six-membered cyclic methacrylic imide groups, as determined by titration.

6. The polymer composition as claimed in claim 1, wherein the one or more phosphorus acid group containing polymers of six-membered cyclic methacrylic imide of the present invention, excluding side chains, quaternary ammonium groups, the metals in any methacrylic acid salts, and N-substituents on any methacrylic imide group have a weight average molecular weight (Mw) of from 1,000 to 25,000.

7. The polymer composition as claimed in claim 1, wherein the one or more polymers of six-membered cyclic methacrylic imide have one or more N-substituent on the six-membered cyclic methacrylic imide chosen from an N-alkyl substituted six-membered cyclic methacrylic imide, an N-polydiorganosiloxanyl substituted six-membered cyclic methacrylic imide, an N-polyolefin substituted six-membered cyclic methacrylic imide, an N-vinyl polymer substituted six-membered cyclic methacrylic imide, an N-polyamide polymer substituted six-membered cyclic and combinations thereof.

8. The polymer composition as claimed in claim 7, wherein the one or more polymers of six-membered cyclic methacrylic imide contains one or more N-polydiorganosiloxanyl substituent and the N-polydiorganosiloxanyl substituent is chosen from an N-polydimethylsiloxane, an N-polydiphenylsiloxane, an N-polydiarylsiloxane and an N-polymethylphenylsiloxane.

9. The polymer composition as claimed in claim 7, wherein the six-membered cyclic methacrylic imide contains one or more N-substituted hydrophobe chosen from an N-C₁ to C₅₀₀ alkyl substituted six-membered cyclic methacrylic imide and an N-polyolefin substituted six-membered cyclic methacrylic imide.

10. The polymer composition as claimed in claim 1, wherein the one or more phosphorus acid group containing polymers of six-membered cyclic methacrylic imide further contain one or more methacrylic acid in polymerized form, methacrylic acid metal salt, methacrylic acid quaternary ammonium carboxylate group, ester side chain group or amide side chain group chosen from an ether amide side chain group, a polyether amide side chain group, an ether ester side chain group, a polyether ester side chain group, a hydrophobic C₁ to C₅₀₀ alkyl ester side chain, a hydrophobic C₁ to C₅₀₀ alkyl amide side chain, a polyolefin ester side chain, a polyolefin amide side chain, a polysiloxanyl amide side chain, and a polysiloxanyl ester side chain, or combinations thereof.

11. The polymer composition as claimed in claim 1, wherein the composition comprises a powder, pellet, granule, or suspension of the polymer in one or more non-aqueous carriers.

12. The polymer composition as claimed in claim 11, wherein the compositions further comprise a polymer chosen from a polyolefin, a polyester, a polyamide, a vinyl emulsion polymer, an acrylic emulsion polymer, a polystyrene, combinations thereof and blends thereof.

13. A method for making a phosphorus acid group containing polymer of six-membered cyclic methacrylic acid imide (methacrylic imide) having one or more methacrylic acid, methacrylic acid salt, quaternary ammonium carboxylate, ester side chain or amide side chain group as claimed in claims 1 to 12, comprising:
aqueous solution polymerizing to form a precursor polymer, a monomer mixture of one or more phosphorus acid compound and from 60 to 100 wt.%, based on the total weight of monomers used to make the precursor polymer, of methacrylic acid or its salts as polymerized units;
drying the precursor polymer to form a methacrylic anhydride group containing backbone polymer having at least one six-membered cyclic methacrylic anhydride group and from 7.5 to 95 wt.% of the methacrylic acid polymerized units in the form of methacrylic anhydride, as determined by titration of the methacrylic anhydride group containing backbone polymer, wherein the drying is carried out with no or as little agitation or shear as possible in an oven, or any extruder, kneader or kneader reactor comprising a low shear extruder;
reacting in a fluid medium at from 0 to 220 °C the methacrylic anhydride group containing backbone polymer with one or more amine compound in a molar amount of amine not to exceed the moles of methacrylic anhydride in the methacrylic anhydride group containing backbone polymer, as determined by titration, to form at least one amic acid group; and,
reacting in a fluid medium the amic acid group with a neighboring methacrylic acid or salt group on the backbone polymer at from 100 to 250 °C to form a six-membered cyclic methacrylic imide group containing polymer.

## Patentansprüche

1. Eine Polymerzusammensetzung aus einer oder mehreren Phosphorsäuregruppen enthaltenden Polymeren von sechsgliedrigem cyclischem Methacrylsäureimid, beinhaltend ein Hauptkettenpolymer, das eines oder mehrere von Folgenden aufweist:
Methacrylsäure, Methacrylsäuresalz, quartäre Ammoniumgruppe, Esterseitenkettengruppe oder Amidseitenkettengruppe, wobei die Hauptkettenpolymere zu 60 bis 100 Gew.-%, bezogen auf das Gesamtgewicht der Monomere, die zur Herstellung des Hauptkettenpolymers verwendet werden, insgesamt mit Methacrylsäure polymerisierte Einheiten, unabhängig von ihrer Form, beinhalten, und
wobei insgesamt 7,5 bis weniger als 70 Gew.-% der mit Methacrylsäure polymerisierten Einheiten sechsgliedrige cyclische Methacrylsäureanhydridgruppen und sechsgliedrige cyclische Methacrylimidgruppen, die aus den Methacrylsäureanhydridgruppen gebildet werden, beinhalten, wobei die Anzahl der Methacrylsäureanhydridgruppen durch Titration der Hauptkettenpolymere vor dem Bilden der sechsgliedrigen cyclischen Methacrylimidgruppen in den Hauptkettenpolymeren bestimmt wird,
wobei die Polymere im Wesentlichen linear sind, was bedeutet, dass sie weniger als 3 % Imid- oder Anhydridgruppen aufweisen, bezogen auf die Menge an Methacrylsäureanhydriden, wie durch Titration des Hauptkettenpolymers von Methacrylsäureanhydrid, das zur Herstellung des Polymers verwendet wird, bestimmt, welche Vernetzungen oder Zwischenketten-Backbiting-Bindungen entlang des Hauptkettenpolymers bilden; und
wobei die Polymere im Durchschnitt mindestens ein Phosphoratom in der Hauptkette des Polymers aufweisen, das als endständige oder anhängende Gruppe an ein Kohlenstoffatom gebunden ist; und wobei die Titration gemäß der Beschreibung durchgeführt wird.

2. Polymerzusammensetzung gemäß Anspruch 1, wobei die Phosphorsäuregruppe eine Hypophosphitgruppe ist.

3. Polymerzusammensetzung gemäß Anspruch 2, wobei das eine oder die mehreren Phosphorsäuregruppen enthaltenden Polymere von sechsgliedrigem cyclischem Methacrylimid zu 1 bis 20 Gew.-%, bezogen auf das Gesamtgewicht von Phosphorsäuregruppen enthaltenden und Monomerreaktanten, die zur Herstellung des Hauptkettenpolymers des Polymers verwendet werden, eine Hypophosphitverbindung oder ihre Salze beinhalten.

4. Polymerzusammensetzung gemäß Anspruch 1, wobei die Hauptkettenpolymere zu 90 bis 100 Gew.-%, bezogen auf das Gesamtgewicht von Monomeren, die zur Herstellung des Hauptkettenpolymers verwendet werden, insgesamt mit Methacrylsäure polymerisierte Einheiten beinhalten.

5. Polymerzusammensetzung gemäß Anspruch 1, wobei 50 bis 68 Gew.-% oder bevorzugter 60 bis 66,7 Gew.-% der mit Methacrylsäure polymerisierten Einheiten in dem Hauptkettenpolymer Methacrylsäureanhydridgruppen oder sechsgliedrige cyclische Methacrylimidgruppen, wie durch Titration bestimmt, beinhalten.

6. Polymerzusammensetzung gemäß Anspruch 1, wobei das eine oder die mehreren Phosphorsäuregruppen enthaltenden Polymere von sechsgliedrigem cyclischem Methacrylimid der vorliegenden Erfindung, mit Ausnahme von Seitenketten, quartären Ammoniumgruppen, der Metalle in beliebigen Methacrylsäuresalzen und N-Substituenten an einer beliebigen Methacrylimidgruppe, ein Gewichtsmittel des Molekulargewichts (Mw) von 1 000 bis 25 000 aufweisen.

7. Polymerzusammensetzung gemäß Anspruch 1, wobei das eine oder die mehreren Polymere von sechsgliedrigem cyclischem Methacrylimid einen oder mehrere N-Substituenten an dem sechsgliedrigen cyclischen Methacrylimid aufweisen, ausgewählt aus einem mit N-Alkyl substituierten sechsgliedrigen cyclischen Methacrylimid, einem mit N-Polydiorganosiloxanyl substituierten sechsgliedrigen cyclischen Methacrylimid, einem mit N-Polyolefin substituierten sechsgliedrigen cyclischen Methacrylimid, einem mit N-Vinylpolymer substituierten sechsgliedrigen cyclischen Methacrylimid, einem mit N-Polyamidpolymer substituierten sechsgliedrigen cyclischen und Kombinationen davon.

8. Polymerzusammensetzung gemäß Anspruch 7, wobei das eine oder die mehreren Polymere von sechsgliedrigem cyclischem Methacrylimid einen oder mehrere N-Polydiorganosiloxanyl-Substituenten enthalten und der N-Polydiorganosiloxanyl-Substituent aus einem N-Polydimethylsiloxan, einem N-Polydiphenylsiloxan, einem N-Polydiarylsiloxan und einem N-Polymethylphenylsiloxan ausgewählt ist.

9. Polymerzusammensetzung gemäß Anspruch 7, wobei das sechsgliedrige cyclische Methacrylimid einen oder mehrere mit N substituierte hydrophobe Stoffe enthält, ausgewählt aus einem mit N-C₁- bis C₅₀₀-Alkyl substituierten sechsgliedrigen cyclischen Methacrylimid und einem mit N-Polyolefin substituierten sechsgliedrigen cyclischen Methacrylimid.

10. Polymerzusammensetzung gemäß Anspruch 1, wobei das eine oder die mehreren Phosphorsäuregruppen enthaltenden Polymere von sechsgliedrigem cyclischem Methacrylimid ferner eines oder mehrere von Folgenden enthalten: Methacrylsäure in polymerisierter Form, Methacrylsäuremetallsalz, quartäre Methacrylsäureammoniumcarboxylatgruppe, Esterseitenkettengruppe oder Amidseitenkettengruppe, ausgewählt aus einer Etheramidseitenkettengruppe, einer Polyetheramidseitenkettengruppe, einer Etheresterseitenkettengruppe, einer Polyetheresterseitenkettengruppe, einer hydrophoben C₁- bis C₅₀₀-Alkylesterseitenkette, einer hydrophoben C₁- bis C₅₀₀-Alkylamidseitenkette, einer Polyolefinesterseitenkette, einer Polyolefinamidseitenkette, einer Polysiloxanylamidseitenkette und einer Polysiloxanylesterseitenkette oder Kombinationen davon.

11. Polymerzusammensetzung gemäß Anspruch 1, wobei die Zusammensetzung ein Pulver, Pellet, Granulat oder eine Suspension des Polymers in einem oder mehreren nichtwässrigen Trägern beinhaltet.

12. Polymerzusammensetzung gemäß Anspruch 11, wobei die Zusammensetzungen ferner ein Polymer beinhalten, ausgewählt aus einem Polyolefin, einem Polyester, einem Polyamid, einem Vinylemulsionspolymer, einem Acrylemulsionspolymer, einem Polystyrol, Kombinationen davon und Gemischen davon.

13. Ein Verfahren zur Herstellung eines Phosphorsäuregruppen enthaltenden Polymers aus sechsgliedrigem cyclischem Methacrylsäureimid (Methacrylimid), das eines oder mehrere von Folgenden aufweist: Methacrylsäure, Methacrylsäuresalz, quartäres Ammoniumcarboxylat, Esterseitenkette oder Amidseitenkettengruppe gemäß einem der Ansprüche 1 bis 12, beinhaltend:
wässrige Lösung, die zur Bildung eines Vorläuferpolymers eine Monomermischung aus einer oder mehreren Phosphorsäureverbindungen polymerisiert, und zu 60 bis 100 Gew.-%, bezogen auf das Gesamtgewicht von Monomeren, die zur Herstellung des Vorläuferpolymers verwendet werden, Methacrylsäure oder ihre Salze als polymerisierte Einheiten;
Trocknen des Vorläuferpolymers zur Bildung eines Methacrylsäureanhydridgruppen enthaltenden Hauptkettenpolymers, das mindestens eine sechsgliedrige cyclische Methacrylsäureanhydridgruppe und 7,5 bis 95 Gew.-% der Methacrylsäurepolymerisierten Einheiten in Form von Methacrylsäureanhydrid beinhaltet, wie durch Titration des Methacrylsäureanhydridgruppen enthaltenden Hauptkettenpolymers bestimmt, wobei das Trocknen mit keiner oder möglichst wenig Rührung oder Scherung in einem Ofen oder einem beliebigen Extruder, Kneter oder Knetreaktor, der einen Extruder mit niedriger Scherung beinhaltet, durchgeführt wird;
Zur-Reaktion-Bringen, in einem flüssigen Medium bei 0 bis 220 °C, des Methacrylsäureanhydridgruppen enthaltenden Hauptkettenpolymers mit einer oder mehreren Aminverbindungen in einer molaren Menge Amin, damit die Mole von Methacrylsäureanhydrid in dem Methacrylsäureanhydridgruppen enthaltenden Hauptkettenpolymer nicht überschritten werden, wie durch Titration bestimmt, um mindestens eine Amidsäuregruppe zu bilden; und
Zur-Reaktion-Bringen, in einem flüssigen Medium, der Amidsäuregruppe mit einer benachbarten Methacrylsäure- oder -salzgruppe auf dem Hauptkettenpolymer bei 100 bis 250 °C, um ein sechsgliedriges cyclisches Methacrylimidgruppen enthaltendes Polymer zu bilden.

## Revendications

1. Une composition de polymère d'un ou de plusieurs polymères d'imide d'acide méthacrylique cyclique à six chaînons, à teneur en groupe acide phosphoreux, comprenant un polymère squelette ayant un ou plusieurs éléments parmi l'acide méthacrylique, un sel d'acide méthacrylique, un groupe ammonium quaternaire, un groupe de chaîne latérale ester ou un groupe de chaîne latérale amide, dans lequel les polymères squelettes comprennent de 60 à 100 % en poids, rapporté au poids total de monomères utilisés pour fabriquer le polymère squelette, d'unités polymérisées d'acide méthacrylique totales, indépendamment de leur forme, et dans lequel un total allant de 7,5 à moins de 70 % en poids des unités polymérisées d'acide méthacrylique comprennent des groupes anhydride méthacrylique cyclique à six chaînons et des groupes imide méthacrylique cyclique à six chaînons formés à partir des groupes anhydride méthacrylique, le nombre de groupes anhydride méthacrylique étant déterminé par titrage des polymères squelettes avant la formation des groupes imide méthacrylique cyclique à six chaînons dans les polymères squelettes,
dans laquelle les polymères sont substantiellement linéaires, ce qui signifie qu'ils ont moins de 3 % de groupes imide ou anhydride, rapporté à la quantité d'anhydrides méthacryliques telle que déterminée par titrage du polymère squelette d'anhydride méthacrylique utilisé pour fabriquer le polymère, qui forment des liaisons réticulaires ou des liaisons intrachaînes issues d'un transfert intramoléculaire le long du polymère squelette ; et
dans laquelle les polymères ont en moyenne au moins un atome de phosphore dans le squelette du polymère qui est relié à un atome de carbone en tant que groupe terminal ou pendant ; et dans laquelle le titrage est réalisé conformément à la description.

2. La composition de polymère telle que revendiquée dans la revendication 1, dans laquelle le groupe acide phosphoreux est un groupe hypophosphite.

3. La composition de polymère telle que revendiquée dans la revendication 2, dans laquelle les un ou plusieurs polymères d'imide méthacrylique cyclique à six chaînons, à teneur en groupe acide phosphoreux, comprennent de 1 à 20 % en poids d'un composé hypophosphite ou de ses sels, rapporté au poids total de réactifs à teneur en groupe acide phosphoreux et monomères utilisés pour fabriquer le polymère squelette du polymère.

4. La composition de polymère telle que revendiquée dans la revendication 1, dans laquelle les polymères squelettes comprennent de 90 à 100 % en poids, rapporté au poids total de monomères utilisés pour fabriquer le polymère squelette, d'unités polymérisées d'acide méthacrylique totales.

5. La composition de polymère telle que revendiquée dans la revendication 1, dans laquelle de 50 à 68 % en poids, ou, plus préférentiellement, de 60 à 66,7 % en poids des unités polymérisées d'acide méthacrylique dans le polymère squelette comprennent des groupes anhydride méthacrylique ou des groupes imide méthacrylique cycliques à six chaînons, tel que déterminé par titrage.

6. La composition de polymère telle que revendiquée dans la revendication 1, dans laquelle les un ou plusieurs polymères d'imide méthacrylique cyclique à six chaînons, à teneur en groupe acide phosphoreux de la présente invention, à l'exclusion des chaînes latérales, des groupes ammonium quaternaire, des métaux dans n'importe lesquels des sels d'acide méthacrylique, et des N-substituants sur n'importe quel groupe imide méthacrylique, ont une masse moléculaire moyenne en poids (Mw) allant de 1 000 à 25 000.

7. La composition de polymère telle que revendiquée dans la revendication 1, dans laquelle les un ou plusieurs polymères d'imide méthacrylique cyclique à six chaînons ont un ou plusieurs N-substituants sur l'imide méthacrylique cyclique à six chaînons choisi parmi un imide méthacrylique cyclique à six chaînons à substitution N-alkyle, un imide méthacrylique cyclique à six chaînons à substitution N-polydiorganosiloxanyle, un imide méthacrylique cyclique à six chaînons à substitution N-polyoléfine, un imide méthacrylique cyclique à six chaînons à substitution N-polymère de vinyle, un cyclique à six chaînons à substitution N-polymère de polyamide et des combinaisons de ceux-ci.

8. La composition de polymère telle que revendiquée dans la revendication 7, dans laquelle les un ou plusieurs polymères d'imide méthacrylique cyclique à six chaînons contiennent un ou plusieurs substituants N-polydiorganosiloxanyle et le substituant N-polydiorganosiloxanyle est choisi parmi un N-polydiméthylsiloxane, un N-polydiphénylsiloxane, un N-polydiarylsiloxane et un N-polyméthylphénylsiloxane.

9. La composition de polymère telle que revendiquée dans la revendication 7, dans laquelle l'imide méthacrylique cyclique à six chaînons contient une ou plusieurs molécules hydrophobes N-substituées choisies parmi un imide méthacrylique cyclique à six chaînons à substitution N-alkyle en C₁ à C₅₀₀ et un imide méthacrylique cyclique à six chaînons à substitution N-polyoléfine.

10. La composition de polymère telle que revendiquée dans la revendication 1, dans laquelle les un ou de plusieurs polymères d'imide méthacrylique cyclique à six chaînons, à teneur en groupe acide phosphoreux, contiennent en outre un ou plusieurs éléments parmi l'acide méthacrylique sous forme polymérisée, un sel métallique d'acide méthacrylique, un groupe carboxylate d'ammonium quaternaire d'acide méthacrylique, un groupe de chaîne latérale ester ou un groupe de chaîne latérale amide choisi parmi un groupe de chaîne latérale étheramide, un groupe de chaîne latérale polyétheramide, un groupe de chaîne latérale ester d'éther, un groupe de chaîne latérale ester de polyéther, une chaîne latérale ester d'alkyle en C₁ à C₅₀₀ hydrophobe, une chaîne latérale alkylamide en C₁ à C₅₀₀ hydrophobe, une chaîne latérale ester de polyoléfine, une chaîne latérale polyoléfinamide, une chaîne latérale polysiloxanylamide, et une chaîne latérale ester de polysiloxanyle, ou une combinaison de ceux-ci.

11. La composition de polymère telle que revendiquée dans la revendication 1, la composition comprenant une poudre, une pastille, un granulé, ou une suspension du polymère dans un ou plusieurs vecteurs non aqueux.

12. La composition de polymère telle que revendiquée dans la revendication 11, les compositions comprenant en outre un polymère choisi parmi une polyoléfine, un polyester, un polyamide, un polymère de vinyle en émulsion, un polymère acrylique en émulsion, un polystyrène, des combinaisons de ceux-ci et des mélanges homogènes de ceux-ci.

13. Un procédé pour la fabrication d'un polymère d'imide d'acide méthacrylique (imide méthacrylique) cyclique à six chaînons, à teneur en groupe acide phosphoreux, ayant un ou plusieurs éléments parmi l'acide méthacrylique, un sel d'acide méthacrylique, un carboxylate d'ammonium quaternaire, un groupe de chaîne latérale ester ou un groupe de chaîne latérale amide tel que revendiqué dans les revendications 1 à 12, comprenant :
la polymérisation en solution aqueuse afin de former un polymère précurseur, d'un mélange de monomère d'un ou de plusieurs composés acide phosphoreux et de 60 à 100 % en poids, rapporté au poids total de monomères utilisés pour fabriquer le polymère précurseur d'acide méthacrylique ou de ses sels en tant qu'unités polymérisées ;
le séchage du précurseur polymère afin de former un polymère squelette à teneur en groupe anhydride méthacrylique ayant au moins un groupe anhydride méthacrylique cyclique à six chaînons et de 7,5 à 95 % en poids des unités polymérisées d'acide méthacrylique sous forme d'anhydride méthacrylique, tels que déterminés par titrage du polymère squelette à teneur en groupe anhydride méthacrylique, le séchage étant réalisé sans ou avec le moins d'agitation ou de cisaillement possible dans un four, ou n'importe quel extrudeuse, malaxeur ou réacteur-malaxeur comprenant une extrudeuse à faible cisaillement ;
la mise en réaction dans un milieu fluide entre 0 et 220 °C du polymère squelette à teneur en groupe anhydride méthacrylique avec un ou plusieurs composés amine dans une quantité molaire d'amine n'excédant pas les moles d'anhydride méthacrylique dans le polymère squelette à teneur en groupe anhydride méthacrylique, telles que déterminées par titrage, afin de former au moins un groupe acide amique; et,
la mise en réaction dans un milieu fluide du groupe acide amique avec un acide méthacrylique ou groupe de sel voisin sur le polymère squelette entre 100 et 250 °C afin de former un polymère à teneur en groupe imide méthacrylique à six chaînons.
